# EUROPEAN PATENT APPLICATION

(11) **EP 4 090 113 A1**
(43) Date of publication of application: **16.11.2022**
(21) Application number: 21757863.2
(22) Date of filing: 07.02.2021
(51) Int. Cl.: H04W 72/04, H04W 72/08

(54) **BEAM MANAGEMENT METHOD, BEAM MANAGEMENT SYSTEM, AND RELATED DEVICE**

(30) Priority: 20.02.2020 CN 202010104433
(71) Applicant: Huawei Technologies Co., Ltd., Shenzhen, Guangdong 518129 (CN)
(72) Inventor: DU, Mingde, Shenzhen, Guangdong 518129 (CN)
(74) Representative: Körber, Martin Hans
(86) International application number: PCT/CN2021/075703
(87) International publication number: WO 2021/164592

(57) **Abstract**

Embodiments of this application may be applied to the field of wireless communication, and disclose a beam management method. The method in embodiments of this application includes: A communication device obtains first signal quality, where the first signal quality includes information about signal quality between a terminal and a base station, and data communication between the terminal and the base station is performed through a relay node. The communication device determines a beam configuration of the relay node based on the first signal quality. The first signal quality in embodiments of this application may be obtained by the terminal or the base station. Therefore, the relay node may not depend on a high-performance detector, so that hardware costs of the relay node are reduced.

## Description

This application claims priority to Chinese Patent Application No. 202010104433.7, filed with the China National Intellectual Property Administration on February 20, 2020 and entitled "BEAM MANAGEMENT METHOD, BEAM MANAGEMENT SYSTEM, AND RELATED DEVICE", which is incorporated herein by reference in its entirety.

### TECHNICAL FIELD

Embodiments of this application relate to the field of wireless communication, and in particular, to a beam management method, a beam management system, and a related device.

### BACKGROUND

In a wireless communication network, because a path loss (path loss, PL) exists in space transmission of a radio wave, a communication distance between a base station (base station, BS) and a terminal (user equipment, UE) is limited.

A relay node (relay node, RN) is added between the base station and the terminal, so that the communication distance between the base station and the terminal can be increased. However, if a beam configuration of the relay node is incorrect or not ideal enough, communication quality between the base station and the terminal is affected. To improve the communication quality, the relay node may obtain information about signal quality between the relay node and the terminal through a detector, and then perform corresponding beam configuration based on the information about the signal quality.

Therefore, whether the beam configuration of the relay node is good or not depends on performance of the detector. If the performance of the detector is poor, the beam configuration determined by the relay node is not ideal enough.

### SUMMARY

This application provides a beam management method, a beam management system, and a related device.

According to a first aspect of this application, a beam management method is provided.

Data communication is performed between a terminal and a base station through a relay node. After the terminal transmits a signal to the base station through the relay node, a communication device may obtain first signal quality. The first signal quality reflects information about signal quality of a terminal-relay node-base station link or a base station-relay node-terminal link. The communication device determines a beam configuration of the relay node based on the first signal quality. The beam configuration of the relay node is related to a beam direction.

In this application, the communication device may obtain the first signal quality, and determine the beam configuration of the relay node based on the first signal quality, where the beam configuration is related to the beam direction, data communication is performed between the terminal and the base station through the relay node, and the first signal quality includes information about signal quality between the terminal and the base station. In a process of data communication between the base station and the terminal, the base station or the terminal may evaluate the signal quality between the terminal and the base station, to obtain the first signal quality. Therefore, the relay node may not depend on a high-performance detector, so that hardware costs of the relay node are reduced.

Based on the first aspect of this application, in a first implementation of the first aspect of this application, the communication device is the base station. The first signal quality includes first uplink signal quality. The base station determines an uplink beam configuration of the relay node based on the first uplink signal quality, and then sends a first downlink signal to the relay node, where the first downlink signal includes the uplink beam configuration of the relay node, and the uplink beam configuration of the relay node includes a beam configuration used by the relay node to receive an uplink signal. The base station may evaluate communication quality between the base station and the terminal, to obtain the first uplink signal quality. Therefore, when the communication device is the base station, the base station may directly determine the uplink beam configuration of the relay node based on the obtained first uplink signal quality, so that processing efficiency can be improved.

Based on the first implementation of the first aspect of this application, in a second implementation of the first aspect of this application, if the first uplink signal quality is greater than a first threshold, the uplink beam configuration of the relay node includes an identifier corresponding to a first beam, to indicate the relay node to receive an uplink signal by using the first beam, where the first uplink signal quality is obtained based on the uplink signal received by the relay node by using the first beam.

In this application, when the first uplink signal quality is greater than the first threshold, the base station determines the beam configuration used by the relay node to receive an uplink signal. This can reduce time for determining the beam configuration. A reason is that: When the relay node can receive, by using beams in N directions, the uplink signal sent by the terminal, the base station does not necessarily need to obtain N pieces of corresponding uplink signal quality. Particularly, when the terminal is in a moving state, even if the base station determines the highest uplink signal quality in the N pieces of uplink signal quality, and determines, based on the highest uplink signal quality, the beam configuration used by the relay node to receive an uplink signal, uplink signal quality of the terminal-relay node-base station link may keep changing, and the beam configuration used by the relay node to receive an uplink signal also needs to change.

Based on the first implementation of the first aspect of this application, in a third implementation of the first aspect of this application, the first signal quality is obtained based on an uplink signal received by the relay node by using a first beam. The base station obtains second uplink signal quality, where the second uplink signal quality includes information about signal quality between the terminal and the base station, and the second uplink signal quality is obtained based on an uplink signal received by the relay node by using a second beam. If the first uplink signal quality is greater than the second uplink signal quality, the uplink beam configuration of the relay node includes an identifier corresponding to the first beam, to indicate the relay node to receive the uplink signal by using the first beam. The relay node is located between the base station and the terminal. If the relay node does not improve a signal-to-noise ratio of the uplink signal, signal quality of the terminal is usually lower than that of a terminal directly connected to the base station. Consequently, neither the first signal quality nor the second signal quality may meet a requirement of the communication device on the signal quality. The highest uplink signal quality in the two pieces of uplink signal quality needs to be determined, and communication data between the terminal and the base station is transmitted by using a beam configuration corresponding to the signal quality, to ensure that the communication data between the terminal and the base station is transmitted by using the optimal beam configuration.

Based on any one of the first implementation to the third implementation of the first aspect of this application, in a fourth implementation of the first aspect of this application, the first downlink signal includes an uplink beam configuration of the terminal. The base station determines the uplink beam configuration of the terminal based on the first uplink signal quality, where the uplink beam configuration of the terminal includes a beam configuration used by the terminal to send an uplink signal.

Based on the fourth implementation of the first aspect of this application, in a fifth implementation of the first aspect of this application, the uplink beam configuration of the relay node further includes a beam configuration used by the relay node to send an uplink signal. The base station determines an uplink beam configuration of the base station based on the first uplink signal quality, where the uplink beam configuration of the base station includes a beam configuration used by the base station to receive an uplink signal. When the base station can receive, in a plurality of beam directions, a second uplink signal sent by the relay node, the base station determines the uplink beam configuration of the base station based on the first uplink signal quality. When the relay node can send the second uplink signal to the base station by using beams in a plurality of directions, the base station determines, based on the first uplink signal quality, the beam configuration used by the relay node to send an uplink signal. A relative position between the base station and the relay node usually remains unchanged. However, when the base station or the relay node is created, or the base station or the relay node is reconstructed, or a building between the base station and the relay node changes greatly, the base station may still determine, based on the first uplink signal quality, the beam configuration used by the base station to receive an uplink signal and the beam configuration used by the relay node to send an uplink signal. When the relative position between the base station and the relay node changes due to the foregoing reasons, reconfiguring the beam configuration used by the base station to receive an uplink signal and the beam configuration used by the relay node to send an uplink signal requires high professional knowledge of configuration personnel. Therefore, when the beam configuration is automatically determined based on the first uplink signal quality, workload of the configuration personnel can be reduced.

Based on the fifth implementation of the first aspect of this application, in a sixth implementation of the first aspect of this application, the first downlink signal includes a downlink beam configuration of the terminal, the downlink beam configuration of the terminal is determined based on the first uplink signal quality, the first downlink signal includes a downlink beam configuration of the relay node, the downlink beam configuration of the relay node is determined based on the first uplink signal quality, the downlink beam configuration of the relay node includes a beam configuration used by the relay node to receive a downlink signal and a beam configuration used by the relay node to send a downlink signal, a direction of the beam configuration used by the relay node to receive a downlink signal is the same as a direction of the beam configuration used by the relay node to send an uplink signal, a direction of the beam configuration used by the relay node to send a downlink signal is the same as a direction of the beam configuration used by the relay node to receive an uplink signal, and a direction of the downlink beam configuration of the terminal is the same as a direction of the uplink beam configuration of the terminal. The base station determines a downlink beam configuration of the base station based on the first uplink signal quality, where a direction of the downlink beam configuration of the base station is the same as a direction of the uplink beam configuration of the base station. The base station sends the first downlink signal to the relay node based on the downlink beam configuration of the base station.

In this application, according to channel reciprocity, the base station determines the downlink beam configuration of the base station, the downlink beam configuration of the relay node, and the downlink beam configuration of the terminal based on the first uplink signal quality. Because the downlink beam configurations do not need to be determined based on the downlink signal quality, efficiency of determining the beam configurations by the base station can be improved.

Based on any one of the first implementation to the sixth implementation of the first aspect of this application, in a seventh implementation of the first aspect of this application, the base station obtains a first uplink signal sent by the terminal. The base station determines third uplink signal quality based on the first uplink signal. The base station adds a first identifier to the first downlink signal if the third uplink signal quality is greater than a second threshold. The first uplink signal is data that is not sent by the terminal to the base station through the relay node. The base station may determine, based on the first uplink signal, the third uplink signal quality between the base station and the terminal that are directly connected, and include the first identifier in the first downlink signal if the third uplink signal quality is greater than the second threshold, to notify the relay node that signal quality of data directly sent by the terminal meets a requirement of the base station and the relay node may not need to forward a control signal between the terminal and the base station. Therefore, the amount of data forwarded by the relay node can be reduced, and redundant information received by the base station can be reduced.

Based on the first aspect of this application, in an eighth implementation of the first aspect of this application, the communication device is the terminal. The terminal obtains first downlink signal quality, where the first downlink signal quality includes information about signal quality between the terminal and the base station, and data communication between the terminal and the base station is performed through the relay node. The terminal sends a third uplink signal to the relay node, where the third uplink signal includes a downlink beam configuration of the relay node, an uplink beam configuration of the relay node includes a beam configuration used by the relay node to send a downlink signal, and the downlink beam configuration of the relay node is determined based on the first downlink signal quality. The terminal may evaluate communication quality between the base station and the terminal, to obtain the first downlink signal quality. Therefore, when the communication device is the terminal, the terminal may directly determine the downlink beam configuration of the relay node based on the obtained first downlink signal quality, so that processing efficiency can be improved.

Based on the eighth implementation of the first aspect of this application, in a ninth implementation of the first aspect of this application, if the first downlink signal quality is greater than a third threshold, the downlink beam configuration of the relay node includes an identifier corresponding to a first beam, to indicate the relay node to send a downlink signal by using the first beam, where the first downlink signal quality is obtained based on a downlink signal sent by the relay node by using a second beam.

In this application, when the first downlink signal quality is greater than the third threshold, the communication device determines a beam configuration used by the relay node to receive an uplink signal. This can reduce time for determining the beam configuration. A reason is that: When the relay node can send the downlink signal to the terminal by using beams in N directions, the communication device does not necessarily need to obtain N pieces of corresponding downlink signal quality. Particularly, when the terminal is in a moving state, even if the communication device determines the highest uplink signal quality in N pieces of uplink signal quality, and the base station determines, based on the highest downlink signal quality, the beam configuration used by the relay node to send a downlink signal, downlink signal quality of the base station-relay node-terminal link may keep changing, and the beam configuration used by the relay node to send a downlink signal also needs to change.

Based on the eighth implementation of the first aspect of this application, in a tenth implementation of the first aspect of this application, the first downlink signal quality is obtained based on a first downlink signal sent by the relay node by using a second beam. The base station obtains second downlink signal quality, where the second downlink signal quality includes information about signal quality between the terminal and the base station, and the second downlink signal quality is obtained based on a downlink signal sent by the relay node by using a first beam. If the first downlink signal quality is greater than the second downlink signal quality, the downlink beam configuration of the relay node includes an identifier corresponding to the first beam, to indicate the relay node to send the downlink signal by using the first beam. The relay node is located between the base station and the terminal. If the relay node does not improve a signal-to-noise ratio of the downlink signal, signal quality of the terminal is usually lower than that of a terminal directly connected to the base station. Consequently, neither the first signal quality nor the second signal quality may meet a requirement of the communication device on the signal quality. The highest uplink signal quality in the two pieces of uplink signal quality needs to be determined, and communication data between the terminal and the base station is transmitted by using a beam configuration corresponding to the signal quality, to ensure that the communication data between the terminal and the base station is transmitted by using the optimal beam configuration.

Based on any one of the eighth implementation to the tenth implementation of the first aspect of this application, in an eleventh implementation of the first aspect of this application, the terminal determines a downlink beam configuration of the terminal based on the first downlink signal quality, where the downlink beam configuration of the terminal includes a beam configuration used by the terminal to receive a downlink signal.

Based on the eleventh implementation of the first aspect of this application, in a twelfth implementation of the first aspect of this application, the downlink beam configuration of the relay node includes a beam configuration used by the relay node to receive a downlink signal, the third uplink signal includes a downlink beam configuration of the base station, the downlink beam configuration of the base station includes a beam configuration used by the base station to send a downlink signal, and the downlink beam configuration of the base station is determined based on the first downlink signal quality. When the base station can send the first downlink signal to the relay node by using beams in a plurality of directions, the terminal determines the downlink beam configuration of the base station based on the first downlink signal quality. When the relay node can receive, in a plurality of beam directions, the first downlink signal sent by the base station, the terminal determines, based on the first downlink signal quality, the beam configuration used by the relay node to receive a downlink signal. A relative position between the base station and the relay node usually remains unchanged. However, when the base station or the relay node is created, or the base station or the relay node is reconstructed, or a building between the base station and the relay node changes greatly, the terminal may still determine, based on the first downlink signal quality, the beam configuration used by the base station to send a downlink signal and the beam configuration used by the relay node to receive a downlink signal. When the relative position between the base station and the relay node changes due to the foregoing reasons, reconfiguring the beam configuration used by the base station to send a downlink signal and the beam configuration used by the relay node to receive a downlink signal requires high professional knowledge of configuration personnel. Therefore, when the beam configuration is automatically determined based on the first uplink signal quality, workload of the configuration personnel can be reduced.

Based on the twelfth implementation of the first aspect of this application, in a thirteenth implementation of the first aspect of this application, the third uplink signal includes an uplink beam configuration of the base station, the third uplink signal includes an uplink beam configuration of the relay node, the uplink beam configuration of the relay node includes a beam configuration used by the relay node to receive an uplink signal and a beam configuration used by the relay node to send an uplink signal, a direction of the beam configuration used by the relay node to receive an uplink signal is the same as a direction of the beam configuration used by the relay node to send a downlink signal, a direction of the beam configuration used by the relay node to send an uplink signal is the same as a direction of the beam configuration used by the relay node to receive a downlink signal, and a direction of the uplink beam configuration of the base station is the same as a direction of the downlink beam configuration of the base station. The terminal determines an uplink beam configuration of the terminal based on the first downlink signal quality, where a direction of the uplink beam configuration of the terminal is the same as a direction of the downlink beam configuration of the terminal. The terminal sends the third uplink signal to the relay node based on the uplink beam configuration of the terminal.

In this application, according to channel reciprocity, the terminal determines the uplink beam configuration of the base station, the uplink beam configuration of the relay node, and the uplink beam configuration of the terminal based on the first downlink signal quality. Because the uplink beam configurations do not need to be determined based on the uplink signal quality, efficiency of determining the beam configurations by the terminal can be improved.

Based on any one of the eighth implementation to the thirteenth implementation of the first aspect of this application, in a fourteenth implementation of the first aspect of this application, the terminal obtains the first downlink signal sent by the base station. The terminal determines third downlink signal quality based on the first downlink signal. The terminal adds a first identifier to the third uplink signal if the third downlink signal quality is greater than a fourth threshold.

The first downlink signal is data that is not sent by the base station to the terminal through the relay node. The terminal may determine, based on the first downlink signal, the third downlink signal quality between the base station and the terminal that are directly connected, and include the first identifier in the third uplink signal if the third downlink signal quality is greater than the second threshold, to notify the relay node that signal quality of data directly sent by the base station meets a requirement of the terminal and the relay node may not need to forward a control signal between the terminal and the base station. Therefore, the amount of data forwarded by the relay node can be reduced, and redundant information received by the terminal can be reduced.

According to a second aspect of this application, a beam management method is provided.

A communication device obtains a first signal, where the first signal includes a beam configuration of the communication device, the beam configuration of the communication device is obtained based on first signal quality, the first signal quality includes information about signal quality between a terminal and a base station, and data communication between the terminal and the base station is performed through a relay node. The communication device sends data between the terminal and the base station based on the beam configuration of the communication device.

In this application, the communication device may obtain the beam configuration of the communication device, and send the data between the terminal and the base station based on the beam configuration of the communication device. Data communication between the terminal and the base station is performed through the relay node. The beam configuration of the communication device is obtained based on the first signal quality, and the first signal quality includes the information about the signal quality between the terminal and the base station. In a process of data communication between the base station and the terminal, the base station or the terminal may evaluate the signal quality between the terminal and the base station, to obtain the first signal quality. Therefore, the relay node may not depend on a high-performance detector, so that hardware costs of the relay node are reduced.

Based on the second aspect of this application, in a first implementation of the second aspect of this application, the communication device is the relay node. The relay node obtains a first downlink signal, where the first downlink signal includes an uplink beam configuration of the relay node, the uplink beam configuration of the relay node is obtained based on first uplink signal quality, the first uplink signal quality includes the information about the signal quality between the terminal and the base station, and data communication between the terminal and the base station is performed through the relay node. The relay node receives, based on the uplink beam configuration of the relay node, an uplink signal sent by the terminal. The relay node can receive the first downlink signal sent by the base station. The base station may evaluate communication quality between the base station and the terminal, to obtain the first uplink signal quality. Therefore, the base station may directly determine the uplink beam configuration of the relay node based on the obtained first uplink signal quality, so that processing efficiency can be improved.

Based on the first implementation of the second aspect of this application, in a second implementation of the second aspect of this application, the uplink beam configuration of the relay node includes a beam configuration used by the relay node to send an uplink signal.

Based on the second implementation of the second aspect of this application, in a third implementation of the second aspect of this application, the beam configuration of the relay node includes a downlink beam configuration of the relay node, the downlink beam configuration of the relay node includes a beam configuration used by the relay node to receive a downlink signal, and the downlink beam configuration of the relay node includes a beam configuration used by the relay node to send a downlink signal.

In this application, the downlink beam configuration of the relay node includes both the beam configuration used by the relay node to receive a downlink signal and the beam configuration used by the relay node to send a downlink signal, and the two beam configurations are determined by the base station based on the first uplink signal quality according to channel reciprocity. Therefore, the base station does not need to determine, based on downlink signal quality, the beam configuration used by the relay node to send a downlink signal, so that efficiency of determining the beam configuration by the base station can be improved.

Based on any one of the first implementation to the third implementation of the second aspect of this application, in a fourth implementation of the second aspect of this application, the first downlink signal includes a first identifier. The relay node determines, based on the first identifier, not to forward a control signal between the terminal and the base station. That the first downlink signal includes a first identifier indicates that signal quality of the data directly sent by the terminal to the base station meets a requirement of the base station, and the relay node may not need to forward the control signal between the terminal and the base station. Therefore, the amount of data forwarded by the relay node can be reduced, and redundant information received by the base station can be reduced.

According to a third aspect of this application, a beam management system is provided.

The beam management system includes a terminal, a relay node, and a base station.

Data communication between the terminal and the base station is performed through the relay node. The terminal may send a first uplink signal to the relay node. The relay node sends a second uplink signal to the base station based on the received first uplink signal. The base station determines first uplink signal quality based on the received second uplink signal, and determines an uplink beam configuration of the relay node based on the first uplink signal quality, where the uplink beam configuration of the relay node includes a beam configuration used by the relay node to receive an uplink signal. The base station includes information about the uplink beam configuration of the relay node in a first downlink signal, and then sends the first downlink signal to the relay node. The relay node receives the first downlink signal sent by the base station, and configures, based on the uplink beam configuration of the relay node, a direction for receiving an uplink signal.

In this application, the base station may obtain the first uplink signal quality, and determine a beam configuration of the relay node based on the first uplink signal quality, where the beam configuration is related to a beam direction, data communication is performed between the terminal and the base station through the relay node, and the first uplink signal quality includes information about signal quality between the terminal and the base station. In a process of data communication between the base station and the terminal, the base station may evaluate the signal quality between the terminal and the base station, to obtain the first uplink signal quality. Therefore, the relay node may not depend on a high-performance detector, so that hardware costs of the relay node are reduced.

Based on the third aspect of this application, in a first implementation of the third aspect of this application, the first downlink signal includes an uplink beam configuration of the terminal. The base station may further determine the uplink beam configuration of the terminal based on the first uplink signal quality. The terminal may further configure, based on the uplink beam configuration of the terminal, a beam for sending an uplink signal.

Based on the first implementation of the third aspect of this application, in a second implementation of the third aspect of this application, the uplink beam configuration of the relay node includes a beam configuration used by the relay node to send an uplink signal. The base station may further determine, based on the first uplink signal quality, the beam configuration used by the relay node to send an uplink signal. The base station may further determine an uplink beam configuration of the base station based on the first uplink signal quality. The base station may further configure, based on the uplink beam configuration of the base station, a direction for receiving an uplink signal. When the base station can receive, in a plurality of beam directions, a second uplink signal sent by the relay node, the base station determines the uplink beam configuration of the base station based on the first uplink signal quality. When the relay node can send the second uplink signal to the base station by using beams in a plurality of directions, the base station determines, based on the first uplink signal quality, the beam configuration used by the relay node to send an uplink signal. A relative position between the base station and the relay node usually remains unchanged. However, when the base station or the relay node is created, or the base station or the relay node is reconstructed, or a building between the base station and the relay node changes greatly, the base station may still determine, based on the first uplink signal quality, a beam configuration used by the base station to receive an uplink signal and the beam configuration used by the relay node to send an uplink signal. When the relative position between the base station and the relay node changes due to the foregoing reasons, reconfiguring the beam configuration used by the base station to receive an uplink signal and the beam configuration used by the relay node to send an uplink signal requires high professional knowledge of configuration personnel. Therefore, when the beam configuration is automatically determined based on the first uplink signal quality, workload of the configuration personnel can be reduced.

Based on the second implementation of the third aspect of this application, in a third implementation of the third aspect of this application, the first downlink signal includes a downlink beam configuration of the terminal, the first downlink signal includes a downlink beam configuration of the relay node, the downlink beam configuration of the relay node includes a beam configuration used by the relay node to receive a downlink signal and a beam configuration used by the relay node to send a downlink signal, a direction of the beam configuration used by the relay node to receive a downlink signal is the same as a direction of the beam configuration used by the relay node to send an uplink signal, a direction of the beam configuration used by the relay node to send a downlink signal is the same as a direction of the beam configuration used by the relay node to receive an uplink signal, and a direction of the downlink beam configuration of the terminal is the same as a direction of the uplink beam configuration of the terminal. The base station is further configured to: determine the downlink beam configuration of the terminal based on the first uplink signal quality; determine the downlink beam configuration of the relay node based on the first uplink signal quality; and determine a downlink beam configuration of the base station based on the first uplink signal quality, where a direction of the downlink beam configuration of the base station is the same as a direction of the uplink beam configuration of the base station. The base station is specifically configured to send the first downlink signal to the relay node based on the downlink beam configuration of the base station.

In this application, according to channel reciprocity, the base station determines the downlink beam configuration of the base station, the downlink beam configuration of the relay node, and the downlink beam configuration of the terminal based on the first uplink signal quality. Because the downlink beam configurations do not need to be determined based on the downlink signal quality, efficiency of determining the beam configurations by the base station can be improved.

Based on the second implementation of the third aspect of this application, in a fourth implementation of the third aspect of this application, the relay node is further configured to send a second downlink signal to the terminal, where the second downlink signal is obtained based on the first downlink signal. The terminal is further configured to obtain first downlink signal quality based on the second downlink signal. The terminal is further configured to: determine the downlink beam configuration of the relay node based on the first downlink signal quality, where the downlink beam configuration of the relay node includes the beam configuration used by the relay node to send a downlink signal; and send a third uplink signal to the relay node.

The downlink beam configuration of the relay node is determined based on the first downlink signal quality, and the uplink beam configuration of the relay node is determined based on the first uplink signal quality. In a process of communication between the base station and the terminal, uplink signal quality may be different from downlink signal quality even if a beam configuration of an uplink communication link is the same as a beam configuration of a downlink communication link, which may be understood as that a direction of a beam configuration used by the communication device to receive a signal is the same as a direction of a beam configuration used by the communication device to send a signal, where the communication device includes the base station, the relay node, and the terminal. Therefore, compared with using channel reciprocity, determining an uplink beam configuration by using the uplink signal quality and determining a downlink beam configuration by using the downlink signal quality may obtain more accurate beam configurations.

Based on the fourth implementation of the third aspect of this application, in a fifth implementation of the third aspect of this application, the terminal is further configured to determine the downlink beam configuration of the terminal based on the first downlink signal quality, where the downlink beam configuration of the terminal includes a beam configuration used by the terminal to receive a downlink signal.

Based on the fifth implementation of the third aspect of this application, in a sixth implementation of the third aspect of this application, the downlink beam configuration of the relay node includes the beam configuration used by the relay node to receive a downlink signal. The third uplink signal includes the downlink beam configuration of the base station. The terminal is further configured to determine, based on the first downlink signal quality, the beam configuration used by the relay node to receive a downlink signal. The terminal is further configured to determine the downlink beam configuration of the base station based on the first downlink signal quality. When the base station can send the first downlink signal to the relay node by using beams in a plurality of directions, the terminal determines the downlink beam configuration of the base station based on the first downlink signal quality. When the relay node can receive, in a plurality of beam directions, the first downlink signal sent by the base station, the terminal determines, based on the first downlink signal quality, the beam configuration used by the relay node to receive a downlink signal. A relative position between the base station and the relay node usually remains unchanged. However, when the base station or the relay node is created, or the base station or the relay node is reconstructed, or a building between the base station and the relay node changes greatly, the terminal may still determine, based on the first downlink signal quality, a beam configuration used by the base station to send a downlink signal and the beam configuration used by the relay node to receive a downlink signal. When the relative position between the base station and the relay node changes due to the foregoing reasons, reconfiguring the beam configuration used by the base station to send a downlink signal and the beam configuration used by the relay node to receive a downlink signal requires high professional knowledge of configuration personnel. Therefore, when the beam configuration is automatically determined based on the first uplink signal quality, workload of the configuration personnel can be reduced.

Based on the third aspect of this application, or any one of the first implementation to the sixth implementation of the third aspect of this application, in a seventh implementation of the third aspect of this application, the base station is further configured to: receive the first uplink signal sent by the terminal, and determine third uplink signal quality based on the first uplink signal. The base station adds a first identifier to the first downlink signal if the third uplink signal quality is greater than a second threshold. The relay node is further configured to determine, based on the first identifier, not to forward a control signal between the terminal and the base station. The first uplink signal is data that is not sent by the terminal to the base station through the relay node. The base station may determine, based on the first uplink signal, the third uplink signal quality between the base station and the terminal that are directly connected, and include the first identifier in the first downlink signal if the third uplink signal quality is greater than the second threshold, to notify the relay node that signal quality of data directly sent by the terminal meets a requirement of the base station and the relay node may not need to forward the control signal between the terminal and the base station. Therefore, the amount of data forwarded by the relay node can be reduced, and redundant information received by the base station can be reduced.

Based on the third aspect of this application, or any one of the first implementation to the seventh implementation of the third aspect of this application, in an eighth implementation of the third aspect of this application, the base station is specifically configured to: if the first uplink signal quality is greater than a first threshold, the uplink beam configuration of the relay node includes an identifier corresponding to a first beam, to indicate the relay node to receive an uplink signal by using the first beam, where the first uplink signal quality is obtained based on the uplink signal received by the relay node by using the first beam. In this application, when the first uplink signal quality is greater than the first threshold, the base station determines the beam configuration used by the relay node to receive an uplink signal. This can reduce time for determining the beam configuration.

Based on the third aspect of this application, or any one of the first implementation to the seventh implementation of the third aspect of this application, in a ninth implementation of the third aspect of this application, the first signal quality is obtained based on an uplink signal received by the relay node by using a first beam. The base station is further configured to obtain the third uplink signal quality, where the third uplink signal quality includes information about signal quality between the terminal and the base station, and second signal quality is obtained based on an uplink signal received by the relay node by using a second beam. The base station is specifically configured to: if the first uplink signal quality is greater than the third uplink signal quality, the uplink beam configuration of the relay node includes an identifier corresponding to the first beam, to indicate the relay node to receive the uplink signal by using the first beam. The relay node is located between the base station and the terminal. If the relay node does not improve a signal-to-noise ratio of the uplink signal, signal quality of the terminal is usually lower than that of a terminal directly connected to the base station. Consequently, neither the first signal quality nor the second signal quality may meet a requirement of the base station on the signal quality. The highest uplink signal quality in the two pieces of uplink signal quality needs to be determined, and communication data between the terminal and the base station is transmitted by using a beam configuration corresponding to the signal quality, to ensure that the communication data between the terminal and the base station is transmitted by using the optimal beam configuration.

According to a fourth aspect of this application, a beam management apparatus is provided.

An obtaining unit is configured to obtain first signal quality, where the first signal quality includes information about signal quality between a terminal and a base station, and data communication between the terminal and the base station is performed through a relay node.

A determining unit is configured to determine a beam configuration of the relay node based on the first signal quality.

Based on the fourth aspect of this application, in a first implementation of the fourth aspect of this application, the beam management apparatus is the base station.

The obtaining unit is specifically configured to obtain first uplink signal quality, where the first uplink signal quality includes the information about the signal quality between the terminal and the base station, and data communication between the terminal and the base station is performed through the relay node.

A sending unit is configured to send a first downlink signal to the relay node, where the first downlink signal includes an uplink beam configuration of the relay node, the uplink beam configuration of the relay node includes a beam configuration used by the relay node to receive an uplink signal, and the uplink beam configuration of the relay node is determined based on the first uplink signal quality.

Based on the first implementation of the fourth aspect of this application, in a second implementation of the fourth aspect of this application,
if the first uplink signal quality is greater than a first threshold, the uplink beam configuration of the relay node includes an identifier corresponding to a first beam, to indicate the relay node to receive an uplink signal by using the first beam, where the first uplink signal quality is obtained based on the uplink signal received by the relay node by using the first beam.

Based on the first implementation of the fourth aspect of this application, in a third implementation of the fourth aspect of this application,
the first uplink signal quality is obtained based on a first uplink signal received by the relay node by using a first beam.

The obtaining unit is further configured to obtain second uplink signal quality, where the second uplink signal quality includes information about signal quality between the terminal and the base station, and the third uplink quality is obtained based on an uplink signal received by the relay node by using a second beam.

If the first uplink signal quality is greater than the second uplink signal quality, the uplink beam configuration of the relay node includes an identifier corresponding to the first beam, to indicate the relay node to receive the uplink signal by using the first beam, so that the relay node uses the first beam as the uplink beam configuration of the relay node.

Based on any one of the first implementation to the third implementation of the fourth aspect of this application, in a fourth implementation of the fourth aspect of this application, the first downlink signal further includes an uplink beam configuration of the terminal, the uplink beam configuration of the terminal is determined based on the first uplink signal quality, and the uplink beam configuration of the terminal includes a beam configuration used by the terminal to send an uplink signal.

Based on the fourth implementation of the fourth aspect of this application, in a fifth implementation of the fourth aspect of this application, the uplink beam configuration of the relay node further includes a beam configuration used by the relay node to send an uplink signal.

The determining unit is further configured to determine an uplink beam configuration of the base station based on the first uplink signal quality, where the uplink beam configuration of the base station includes a beam configuration used by the base station to receive an uplink signal.

Based on the fifth implementation of the fourth aspect of this application, in a sixth implementation of the fourth aspect of this application, the first downlink signal includes a downlink beam configuration of the terminal, the downlink beam configuration of the terminal is determined based on the first uplink signal quality, the first downlink signal includes a downlink beam configuration of the relay node, the downlink beam configuration of the relay node is determined based on the first uplink signal quality, the downlink beam configuration of the relay node includes a beam configuration used by the relay node to receive a downlink signal and a beam configuration used by the relay node to send a downlink signal, a direction of the beam configuration used by the relay node to receive a downlink signal is the same as a direction of the beam configuration used by the relay node to send an uplink signal, a direction of the beam configuration used by the relay node to send a downlink signal is the same as a direction of the beam configuration used by the relay node to receive an uplink signal, and a direction of the downlink beam configuration of the terminal is the same as a direction of the uplink beam configuration of the terminal.

The determining unit is further configured to determine a downlink beam configuration of the base station based on the first uplink signal quality, where a direction of the downlink beam configuration of the base station is the same as a direction of the uplink beam configuration of the base station.

The sending unit is specifically configured to send the first downlink signal to the relay node based on the downlink beam configuration of the base station.

Based on any one of the first implementation to the sixth implementation of the fourth aspect of this application, in a seventh implementation of the fourth aspect of this application, the obtaining unit is further configured to obtain a first uplink signal sent by the terminal.

The determining unit is further configured to determine third uplink signal quality based on the first uplink signal

The apparatus further includes:
an adding unit, configured to add a first identifier to the first downlink signal if the third uplink signal quality is greater than a second threshold.

Based on the fourth aspect of this application, in an eighth implementation of the fourth aspect of this application, the beam management apparatus is the terminal.

An obtaining unit is specifically configured to obtain first downlink signal quality, where the first downlink signal quality includes the information about the signal quality between the terminal and the base station, and data communication between the terminal and the base station is performed through the relay node.

The apparatus further includes:
a sending unit, configured to send a third uplink signal to the relay node, where the third uplink signal includes a downlink beam configuration of the relay node, an uplink beam configuration of the relay node includes a beam configuration used by the relay node to send a downlink signal, and the downlink beam configuration of the relay node is determined based on the first downlink signal quality.

Based on the eighth implementation of the fourth aspect of this application, in a ninth implementation of the fourth aspect of this application,
if the first downlink signal quality is greater than a third threshold, the downlink beam configuration of the relay node includes an identifier corresponding to a first beam, to indicate the relay node to send a downlink signal by using the first beam, where the first downlink signal quality is obtained based on a downlink signal sent by the relay node by using a second beam.

Based on the eighth implementation of the fourth aspect of this application, in a tenth implementation of the fourth aspect of this application,
the first downlink signal quality is obtained based on a first downlink signal sent by the relay node by using a second beam.

The obtaining unit is further configured to obtain second downlink signal quality, where the second downlink signal quality includes information about signal quality between the terminal and the base station, and the third downlink quality is obtained based on a downlink signal sent by the relay node by using a first beam.

If the first downlink signal quality is greater than the second downlink signal quality, the downlink beam configuration of the relay node includes an identifier corresponding to the first beam, to indicate the relay node to send the downlink signal by using the first beam.

Based on any one of the eighth implementation to the tenth implementation of the fourth aspect of this application, in an eleventh implementation of the fourth aspect of this application, the determining unit is further configured to determine, by the terminal, a downlink beam configuration of the terminal based on the first downlink signal quality, where the downlink beam configuration of the terminal includes a beam configuration used by the terminal to receive a downlink signal.

Based on the eleventh implementation of the fourth aspect of this application, in a twelfth implementation of the fourth aspect of this application, the downlink beam configuration of the relay node includes a beam configuration used by the relay node to receive a downlink signal, the third uplink signal includes a downlink beam configuration of the base station, the downlink beam configuration of the base station includes a beam configuration used by the base station to send a downlink signal, and the downlink beam configuration of the base station is determined based on the first downlink signal quality.

Based on the twelfth implementation of the fourth aspect of this application, in a thirteenth implementation of the fourth aspect of this application, the third uplink signal includes an uplink beam configuration of the base station, the third uplink signal includes an uplink beam configuration of the relay node, the uplink beam configuration of the relay node includes a beam configuration used by the relay node to receive an uplink signal and a beam configuration used by the relay node to send an uplink signal, a direction of the beam configuration used by the relay node to receive an uplink signal is the same as a direction of the beam configuration used by the relay node to send a downlink signal, a direction of the beam configuration used by the relay node to send an uplink signal is the same as a direction of the beam configuration used by the relay node to receive a downlink signal, and a direction of the uplink beam configuration of the base station is the same as a direction of the downlink beam configuration of the base station.

The determining unit is further configured to determine an uplink beam configuration of the terminal based on the first downlink signal quality, where a direction of the uplink beam configuration of the terminal is the same as a direction of the downlink beam configuration of the terminal.

The sending unit is specifically configured to send the third uplink signal to the relay node based on the uplink beam configuration of the terminal.

Based on any one of the eighth implementation to the thirteenth implementation of the fourth aspect of this application, in a fourteenth implementation of the fourth aspect of this application, the obtaining unit is further configured to obtain the first downlink signal sent by the base station.

The determining unit is further configured to determine third downlink signal quality based on the first downlink signal.

An adding unit is further configured to add a first identifier to the third uplink signal if the third downlink signal quality is greater than a fourth threshold.

According to a fifth aspect of this application, a beam management apparatus is provided.

An obtaining unit is configured to obtain a first downlink signal, where the first downlink signal includes an uplink beam configuration of a relay node, the uplink beam configuration of the relay node is obtained based on first uplink signal quality, the first uplink signal quality includes information about signal quality between a terminal and a base station, and data communication between the terminal and the base station is performed through the relay node.

A sending unit is configured to receive, based on the uplink beam configuration of the relay node, an uplink signal sent by the terminal.

Based on the fifth aspect of this application, in a first implementation of the fifth aspect of this application, the uplink beam configuration of the relay node includes a beam configuration used by the relay node to send an uplink signal

Based on the first implementation of the fifth aspect of this application, in a second implementation of the fifth aspect of this application, a beam configuration of the relay node includes a downlink beam configuration of the relay node, the downlink beam configuration of the relay node includes a beam configuration used by the relay node to receive a downlink signal, and the downlink beam configuration of the relay node includes a beam configuration used by the relay node to send a downlink signal.

Based on either of the first implementation and the second implementation of the fifth aspect of this application, in a third implementation of the fifth aspect of this application, the first downlink signal includes a first identifier.

The apparatus further includes:
a determining unit, configured to determine, by the relay node based on the first identifier, not to forward a control signal between the terminal and the base station.

According to a sixth aspect of this application, a chip system is provided.

The chip system includes a processor, a memory, and a transceiver. The memory, the transceiver, and the processor are interconnected through a line. The memory stores instructions, and the instructions are executed by the processor.

The chip system is used in a base station, and the processor performs, according to the instructions, the method according to any one of the first implementation to the seventh implementation of the first aspect, or the method according to the second aspect.

Alternatively, the chip system is used in a terminal, and the processor performs, according to the instructions, the method according to any one of the eighth implementation to the fourteenth implementation of the first aspect, or the method according to the second aspect.

Alternatively, the chip system is used in a relay node, and the processor performs, according to the instructions, the method according to any one of the first implementation to the fourth implementation of the second aspect, or the method according to the first aspect.

According to a seventh aspect of this application, a beam management device is provided.

The beam management device includes a memory and a processor.

The memory is configured to store a program.

The processor is configured to execute a program in the memory, including performing the method according to any one of the first aspect or the implementations of the first aspect, or the method according to any one of the second aspect or the implementations of the second aspect.

According to an eighth aspect of this application, a computer storage medium is provided. The computer storage medium stores instructions. When the instructions are run on a computer, the computer is enabled to perform the method according to any one of the first aspect or the implementations of the first aspect, or the method according to any one of the second aspect or the implementations of the second aspect.

According to a ninth aspect of this application, a computer program product is provided. When the computer program product is executed on a computer, the computer is enabled to perform the method according to any one of the first aspect or the implementations of the first aspect, or the method according to any one of the second aspect or the implementations of the second aspect.

### BRIEF DESCRIPTION OF DRAWINGS

FIG. 1 is a schematic diagram of a network framework according to an embodiment of this application;
FIG. 2 is a schematic flowchart of a beam management method according to an embodiment of this application;
FIG. 3A and FIG. 3B are another schematic flowchart of a beam management method according to an embodiment of this application;
FIG. 4 is a schematic diagram of a beam according to an embodiment of this application;
FIG. 5 is another schematic diagram of a beam according to an embodiment of this application;
FIG. 6 is another schematic diagram of a beam according to an embodiment of this application;
FIG. 7 is another schematic flowchart of a beam management method according to an embodiment of this application;
FIG. 8 is a schematic diagram of a structure of a beam management apparatus according to an embodiment of this application;
FIG. 9 is a schematic diagram of another structure of a beam management apparatus according to an embodiment of this application;
FIG. 10 is a schematic diagram of another structure of a beam management apparatus according to an embodiment of this application;
FIG. 11 is a schematic diagram of another structure of a beam management apparatus according to an embodiment of this application;
FIG. 12 is a schematic diagram of a structure of a beam management device according to an embodiment of this application; and
FIG. 13 is a schematic diagram of a structure of a chip system according to an embodiment of this application.

### DESCRIPTION OF EMBODIMENTS

Embodiments of this application are applied to the field of wireless communication, and provide a beam management method, a beam management system, and a related device, to reduce hardware costs of a relay node.

To better understand the beam management method in embodiments of this application, the following describes the background of embodiments of this application.

In an ideal radio propagation model, when transmit power of a transmit end is fixed, received power of a receive end is directly proportional to the square of a wavelength, a transmit antenna gain, and a receive antenna gain, and is inversely proportional to the square of a distance between the transmit antenna and the receive antenna. In 2G, 3G, and 4G, a radio wave is a decimeter wave or a centimeter wave. In 5G, a radio wave has a millimeter-level wavelength, and is also referred to as a millimeter wave. Because received power is directly proportional to a square of a wavelength, compared with the centimeter wave or the decimeter wave, the millimeter wave has a shorter wavelength, resulting in severe signal attenuation and a greatly reduced penetration capability. Consequently, a transmission loss is higher, that is, power of a signal received by the receive antenna is greatly reduced. Because the country has an upper limit on antenna power, the transmit power of the transmit end cannot be increased randomly. Due to restrictions of materials and physical laws, the transmit antenna gain and the receive antenna gain cannot be increased infinitely. Therefore, a quantity of transmit antennas and a quantity of receive antennas are increased, that is, a multi-antenna array is designed.

Beamforming (beamforming) is also referred to as beamforming or spatial filtering, and is a signal processing technology in which signals are directionally sent and received by using a multi-antenna array. When there is only one antenna, an electromagnetic wave is propagated in a 360-degree radiation direction, but unidirectional propagation of the electromagnetic wave can be implemented by using an antenna array. In a beamforming technology, a parameter of a basic unit of a phase array is adjusted, so that signals at some angles are constructively interfered and signals at some other angles are destructively interfered. Beamforming can be applied to both a signal transmit end and a signal receive end. When beamforming is applied to the transmit end, the transmit end concentrates transmit energy in an expected direction, to increase power in the expected direction and reduce interference and energy waste in other directions. When beamforming is applied to the receive end, the receive end receives signals in an expected direction as much as possible, and suppresses interference signals in other directions.

The descriptions in which beamforming is applied to the receive end may be misleading. Therefore, a description is provided herein. For example, a relay node receives, by using a first beam, a first uplink signal sent by a terminal. During actual application, the relay node does not form any real beam. Therefore, the statement is intended to express the following intention: The relay node adjusts a receiver to a direction of the first beam to receive the first uplink signal sent by the terminal. The relay node may adjust the direction of the receiver by adjusting a parameter of a basic unit of a phase array. In embodiments of this application, a base station, the relay node, and the terminal may serve as transmit ends or receive ends. Therefore, for ease of description, some similar descriptions are used.

The foregoing describes the background of embodiments of this application. The following describes a network architecture in embodiments of this application.

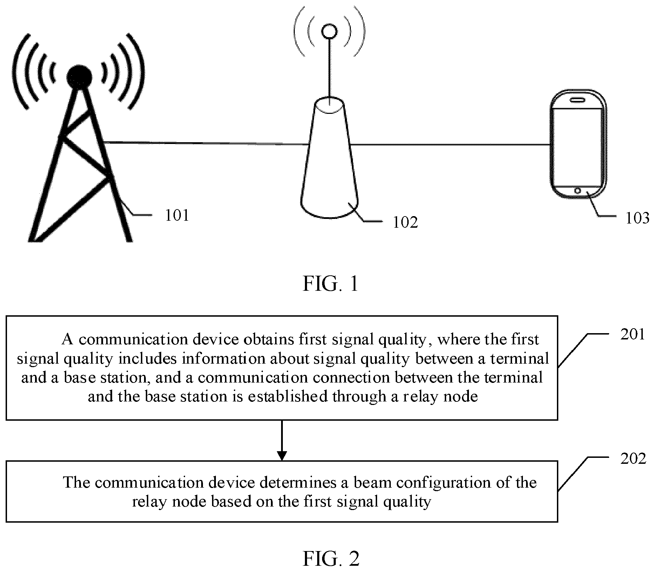

Refer to FIG. 1. The network architecture in embodiments of this application may include:
a base station 101, a relay node 102, and a terminal 103.

The base station 101 may be configured to implement functions such as a radio physical entity, resource scheduling and radio resource management, radio access control, and mobility management. For example, the base station 101 may be a radio access network (radio access network, RAN) device such as a base transceiver station (base transceiver station, BTS) in a GSM system or a CDMA system, a NodeB (NodeB, NB) in a WCDMA system, an evolved NodeB (evolutional NodeB, eNB) in an LTE system, a radio controller in a cloud radio access network (cloud radio access network, CRAN) scenario, a relay node station, a transmission reception point (transmission reception point, TRP), an access point, a vehicle-mounted device, a road side unit (road side unit, RSU), a wearable device, a communication device such as an NR NodeB in a future 5G network, a generation NodeB (generation NodeB, gNB), a centralized unit (centralized unit, CU), a distributed unit (distribute unit, DU), or a communication device in a future evolved PLMN. A specific implementation form of the base station 101 is not limited in this application.

The relay node 102 is one or more devices added between the base station and the terminal, and is responsible for forwarding a radio signal for one or more times. To be specific, a radio signal of the base station arrives at the terminal through a plurality of hops, and a radio signal of the terminal arrives at the base station through a plurality of hops. A simple two-hop relay is used as an example. A base station-terminal link is divided into links: base station-relay station and relay station-terminal, so that a poor-quality link is replaced with high-quality links, to achieve a higher link capacity or better coverage.

The terminal 103 may usually be a device having a capability of communicating with a network device, and may be, for example, an access terminal device, a user unit, a user station, a mobile station, a remote station, a remote terminal device, a mobile device, a user terminal device, a wireless terminal device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (a smartwatch, a smart band, or the like), smart furniture (or a household appliance), a terminal device in a future 5G network, a terminal device in a future evolved public land mobile network (public land mobile network, PLMN), a vehicle device in vehicle to everything (vehicle to everything, V2X), customer-premises equipment (customer-premises equipment, CPE), or the like. A specific implementation form of the terminal is not limited in this application.

A main function of the base station 101 in this embodiment of this application is to receive a second uplink signal sent by the relay node 102, determine first signal quality based on the second uplink signal, determine a beam configuration of the relay node based on the first signal quality, and send a first downlink signal to the relay node 102. A main function of the relay node 102 in this embodiment of this application is to receive a first uplink signal sent by the terminal 103, send the second uplink signal to the base station 101, receive the first downlink signal sent by the base station 101, and configure a beam based on information about the beam configuration of the relay node in the first downlink signal. A main function of the terminal 103 in this embodiment of this application is to send the first uplink signal to the relay node 102.

The foregoing describes the network framework in embodiments of this application. The following describes the beam management method in embodiments of this application. For example, features or content marked by dashed lines in the accompanying drawings in embodiments of this application may be understood as optional operations or optional structures of embodiments.

FIG. 2 is a schematic flowchart of a beam management method according to an embodiment of this application.

Step 201: A communication device obtains first signal quality.

Data communication is performed between a terminal and a base station through a relay node. After the terminal transmits a signal to the base station through the relay node, the communication device may obtain the first signal quality. The first signal quality includes information about signal quality between the terminal and the base station. The information about the signal quality between the terminal and the base station is information about signal quality of a terminal-relay node-base station link or a base station-relay node-terminal link, and reflects information about signal quality of the entire link. The communication device may be the base station, the terminal, the relay node, or another device. When the communication device is the base station, the base station may obtain the first signal quality based on an uplink signal, where the uplink signal is sent by the terminal and forwarded by the relay node. When the communication device is the terminal, the terminal may obtain the first signal quality based on a downlink signal, where the downlink signal is sent by the base station and forwarded by the relay node. When the communication device is the relay node, the relay node may obtain the first signal quality sent by the base station or the terminal. A manner of obtaining the first signal quality is similar to the foregoing obtaining manner in which the communication device is the terminal or the communication device is the base station. When the communication device is the another device, a manner of obtaining the first signal quality is similar to the foregoing obtaining manner in which the communication device is the relay node. Step 202: The communication device determines a beam configuration of the relay node based on the first signal quality.

The communication device determines the beam configuration of the relay node based on the first signal quality. The beam configuration of the relay node is related to a beam direction. When the communication device is the relay node, the communication device configures, based on the beam configuration of the relay node, a beam direction for receiving or sending a signal. When the communication device is the base station, the terminal, or the another device, the communication device sends the beam configuration of the relay node to the relay node, so that the relay node configures, based on the beam configuration of the relay node, a beam direction for receiving or sending a signal

In this embodiment of this application, the communication device may obtain the first signal quality, and determine the beam configuration of the relay node based on the first signal quality, where the beam configuration is related to the beam direction, data communication is performed between the terminal and the base station through the relay node, and the first signal quality includes the information about the signal quality between the terminal and the base station. In a process of data communication between the base station and the terminal, the base station or the terminal may evaluate the signal quality between the terminal and the base station, to obtain the first signal quality. Therefore, the relay node may not depend on a high-performance detector, so that hardware costs of the relay node are reduced.

In this embodiment of this application, the first signal quality reflects signal quality of the entire base station-relay node-terminal link. However, signal quality information obtained by the relay node through a detector reflects signal quality from the terminal to the relay node or signal quality from the base station to the relay node. The signal quality from the terminal to the relay node or the signal quality from the base station to the relay node cannot replace the signal quality of the entire link. Therefore, the beam configuration, of the relay node, determined by the communication device based on the signal quality of the entire link can better ensure communication quality between the base station and the terminal.

In the beam management method in this embodiment of this application, the beam configuration of the relay node includes an uplink beam configuration and a downlink beam configuration. The uplink beam configuration and the downlink beam configuration may be determined based on different signal quality. The uplink beam configuration of the relay node is determined based on uplink signal quality, and the downlink beam configuration of the relay node is determined based on downlink signal quality. Alternatively, the uplink beam configuration and the downlink beam configuration may be determined based on uplink signal quality or downlink signal quality according to channel reciprocity. For ease of description, the following separately describes the several cases.

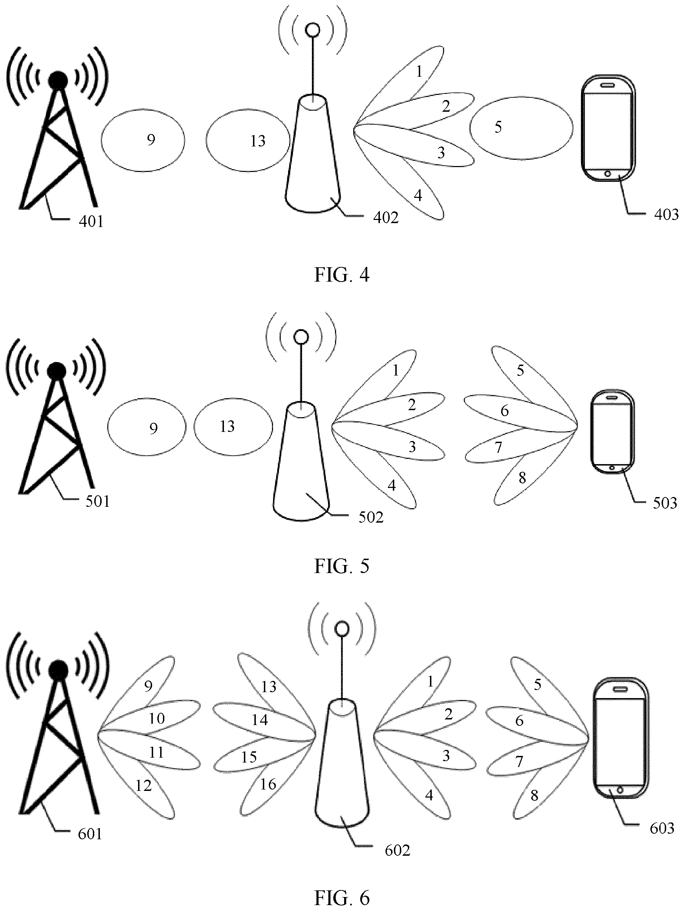

An uplink beam configuration is a beam configuration for transmitting an uplink signal. An uplink beam configuration of the terminal includes a beam configuration used by the terminal to send an uplink signal to the relay node. FIG. 5 is used as an example. The uplink beam configuration of the terminal may include any one of a beam 5, a beam 6, a beam 7, and a beam 8. The uplink beam configuration of the relay node may include one or both of the following: a beam configuration used by the relay node to receive an uplink signal sent by the terminal, and a beam configuration used by the relay node to send an uplink signal to the base station. FIG. 5 is used as an example. The beam configuration used by the relay node to receive an uplink signal sent by the terminal includes any one of a beam 1, a beam 2, a beam 3, and a beam 4, and the beam configuration used by the relay node to send an uplink signal to the base station includes a beam 13. An uplink beam configuration of the base station includes a beam configuration used by the base station to receive an uplink signal sent by the relay node. FIG. 5 is used as an example. The beam configuration used by the base station to receive an uplink signal sent by the relay node includes a beam 9. A downlink beam configuration is a beam configuration for transmitting a downlink signal, and is similar to the uplink beam configuration.

Channel reciprocity means that transmission over an uplink and transmission over a downlink are performed in different slots of a same frequency resource. Within a relatively short time period, it may be considered that channel fading that a signal transmitted over the uplink is to go through is the same as channel fading that a signal transmitted over the downlink is to go through. The same channel fading may indicate that the uplink signal quality is the same as the downlink signal quality.
1. The uplink beam configuration of the relay node is determined based on the uplink signal quality, and the downlink beam configuration of the relay node is determined based on the downlink signal quality.

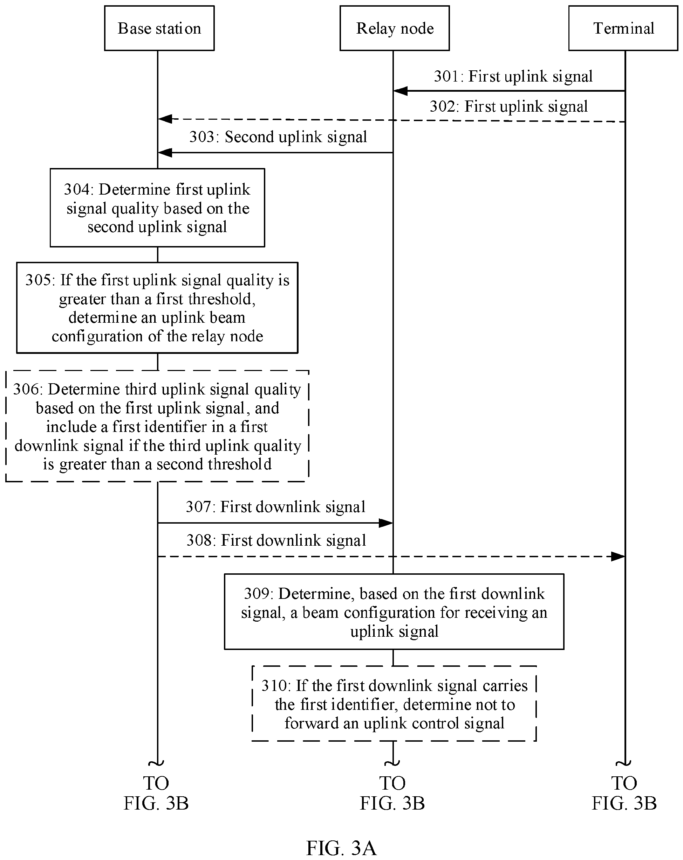

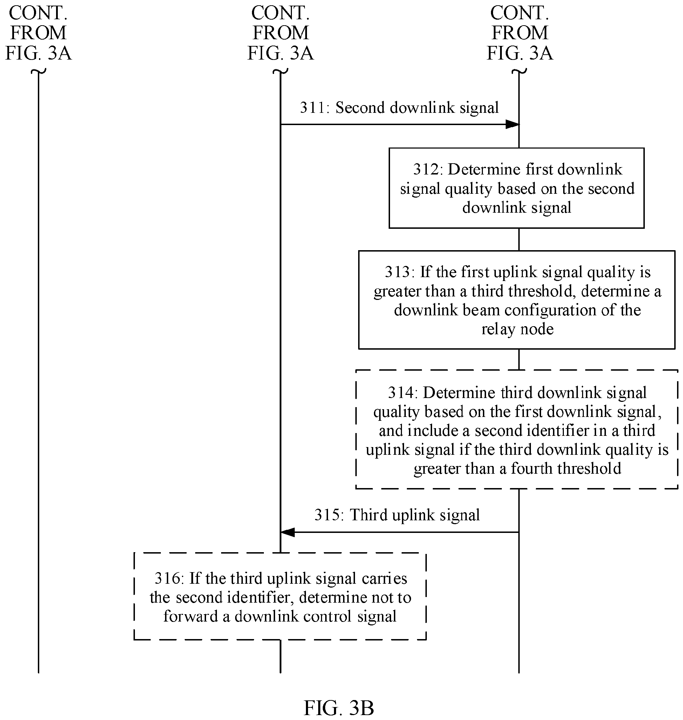

FIG. 3A and FIG. 3B are a schematic flowchart of a beam management method according to an embodiment of this application.

Step 301: A terminal sends a first uplink signal to a relay node.

Although a transmit end can concentrate energy of a beam in a direction through beamforming, to ensure longer propagation of the beam, the beam is narrowed, and coverage of the beam is reduced. Therefore, to cover an original range, the transmit end needs to transmit more beams, and cover different ranges by using different beams. As shown in FIG. 4, it is assumed that a relay node 402 can receive, in four beam directions, data sent by a terminal 403, where beams are a beam 1, a beam 2, a beam 3, and a beam 4. The beam 1 corresponds to a first beam, and the beam 2 corresponds to a second beam. The terminal 403 can send the data to the relay node 402 by using a beam 5 of only one direction. The relay node 402 can send data to the base station 401 by using a beam 13 of only one direction. The base station 401 can receive, by using a beam 9 of only one direction, the data sent by the relay node 402. In a process in which the terminal sends the data to the relay node and the relay node sends the data to the base station, the relay node receives, by using the beams in different directions, the data sent by the terminal, resulting in different signal quality between the terminal and the base station. For example, signal quality is the highest when the relay node uses the beam 2, and signal quality is the lowest when the relay node uses the beam 4. To determine a beam configuration corresponding to the relay node when the signal quality meets a requirement, the terminal needs to attempt to send the first uplink signal to the relay node.

For ease of description, the following assumes an entire process of communication between the terminal and the base station. The terminal sends the first uplink signal to the relay node by using the beam 5, and the relay node adjusts a receiver to a direction of the beam 1 to receive the first uplink signal. The relay node sends a second uplink signal to the base station by using the beam 13, and the base station adjusts a receiver to a direction of the beam 9 to receive the second uplink signal. The base station sends a first downlink signal to the relay node by using the beam 9, and the relay node adjusts the receiver to a direction of the beam 13 to receive the first downlink signal. The relay node sends a second downlink signal to the terminal by using the beam 2, and the terminal adjusts a receiver to a direction of the beam 5 to receive the second downlink signal.

Step 302: The terminal sends the first uplink signal to the base station.

Because the base station may also be located within a signal range of the terminal, the terminal may also send the first uplink signal to the base station.

Optionally, the terminal may send the first uplink signal to the relay node and the base station during one data transmission. For example, the terminal sends the first uplink signal by using the beam 5, and the beam 5 forms spatial signal coverage. If the base station is also located within the signal coverage of the beam 5, the base station may also receive the first uplink signal sent by the terminal during this data transmission. When the base station is not located within the signal coverage of the beam 5, step 302 may not be performed.

Optionally, the terminal sends the first uplink signal to the base station by using a wide beam. Beams having different coverage may be formed through beamforming. For example, coverage of the beam 5 in FIG. 4 is larger than coverage of a beam 5 in FIG. 5. Therefore, compared with the beam 5 in FIG. 5, the beam 5 in FIG. 4 is a wide beam. When the terminal cannot determine whether the base station can receive the first uplink signal, namely, whether the base station is located within signal coverage of the terminal, the terminal sends the first uplink signal to the base station in a form of the wide beam. Because the wide beam has larger coverage, a probability that the base station receives the first uplink signal can be increased.

Step 303: The relay node sends the second uplink signal to the base station.

The relay node adjusts the receiver to a direction of a beam to receive the first uplink signal sent by the terminal. For example, the beam is the beam 1. After receiving the first uplink signal, the relay node sends the second uplink signal to the base station. To distinguish between the first uplink signal directly sent by the terminal to the base station and a first uplink signal sent by the relay node to the base station, herein, the first uplink signal sent by the relay node to the base station is referred to as the second uplink signal. The second uplink signal may be the same as or different from the first uplink signal. For example, the relay node adds an identifier to the first uplink signal, to obtain the second uplink signal, so that the base station determines, based on the identifier, that the second uplink signal is forwarded by the relay node.

Optionally, the first uplink signal includes a control signal and a service signal. An amplify-and-forward (amplify and forward, AF) manner and a decode-and-forward (decoding and forward, DF) manner are used by the relay node for the control signal. Only the amplify-and-forward manner is used by the relay node for the service signal. Because the control signal carries control signaling, the base station needs to receive a more accurate control signal. The amplify-and-forward manner and the decode-and-forward manner are used by the relay node for the control signal, so that a signal-to-noise ratio can be improved and the base station can receive the more accurate control signal. If the base station receives a control signal that cannot be decoded, the base station needs to perform data retransmission. Because there is a relay node, compared with a manner in which the base station and the terminal are directly connected, in this manner, data retransmission takes a longer period of time. Therefore, accuracy of the control signal needs to be ensured, to improve a rate of successfully decoding the control signal by the base station. Because a data amount of the service signal is usually far greater than that of the control signal, if the decode-and-forward manner is used by the relay node for the service signal, a delay is increased, resulting in impact on a speed of data transmission between the base station and the terminal.

Step 304: The base station determines first uplink signal quality based on the second uplink signal.

The base station determines the first uplink signal quality based on the second uplink signal. The first uplink signal quality may be a signal to interference plus noise ratio (signal to interference plus noise ratio, SINR), reference signal received power (reference signal receiving power, RSRP), reference signal received quality (reference signal receiving quality, RSRQ), a signal strength indication (received signal strength indication, RSSI), or the like.

Step 305: If the first uplink signal quality is greater than a first threshold, the base station determines an uplink beam configuration of the relay node.

The uplink beam configuration of the relay node includes a beam configuration used by the relay node to receive an uplink signal from the terminal. The first uplink signal quality reflects uplink signal quality of a terminal-relay node-base station link. If the first uplink signal quality is greater than the first threshold, it indicates that the uplink signal quality meets the requirement when the relay node receives the uplink signal by using the beam 1. In this case, the base station determines the beam 1 as the beam configuration used by the relay node to receive an uplink signal, so that the relay node adjusts the receiver to the direction of the beam 1 to receive the uplink signal. A position of the terminal may change. Consequently, when the relay node receives the uplink signal by using the beam 1, the uplink signal quality is less than the first threshold. Therefore, that the base station determines the beam 1 as the beam configuration used by the relay node to receive an uplink signal does not mean that the relay node always uses the first beam to receive the uplink signal. When the first uplink signal quality is greater than the first threshold, the base station determines the beam 1 as the beam configuration used by the relay node to receive an uplink signal. This can reduce time for determining the beam configuration. A reason is that: When the relay node can receive, by using beams in N directions, the uplink signal sent by the terminal, the base station does not necessarily need to obtain N pieces of corresponding uplink signal quality. Even if the base station determines the highest uplink signal quality in the N pieces of uplink signal quality, and determines, based on the highest uplink signal quality, the beam configuration used by the relay node to receive an uplink signal, when the terminal is in a moving state, the uplink signal quality of the link may keep changing, and the beam configuration used by the relay node to receive an uplink signal also needs to change. Therefore, when the terminal is in the moving state, it is necessary to reduce the time for determining the beam configuration.

Optionally, the first threshold is second uplink signal quality, and the second uplink signal quality is determined based on a third uplink signal. The relay node receives, by using the beam 2, the third uplink signal sent by the terminal.

Optionally, when the relay node can receive, in N beam directions, the uplink signal sent by the terminal, beams in the N directions may generate N pieces of uplink signal quality, and the first uplink signal quality is the highest uplink signal quality in the N pieces of uplink signal quality. The relay node is located between the base station and the terminal. If the relay node does not improve a signal-to-noise ratio of the uplink signal, signal quality of the terminal is usually lower than that of a terminal directly connected to the base station. Consequently, all the N pieces of uplink signal quality may not meet the signal quality requirement. The highest uplink signal quality in the N pieces of uplink signal quality needs to be determined, and communication data between the terminal and the base station is transmitted by using a beam configuration corresponding to the signal quality.

Optionally, when the terminal can send the first uplink signal to the relay node by using beams in a plurality of directions, if the first uplink signal quality is greater than the first threshold, the base station determines the beam 5 as an uplink beam configuration of the terminal. As shown in FIG. 5, it is assumed that a terminal 503 can send an uplink signal to a relay node 502 by using beams in four beam directions, where the beams are a beam 5, a beam 6, a beam 7, and a beam 8. In step 301, the terminal sends the first uplink signal to the relay node by using a beam. For example, the beam is the beam 5. If the first uplink signal quality is greater than the first threshold, a base station 501 determines the beam 5 as a beam configuration used by the terminal 503 to send an uplink signal to the relay node 502, namely, an uplink beam configuration of the terminal 503.

Optionally, the base station can receive, in a plurality of beam directions, the second uplink signal sent by the relay node, and/or the relay node can send the second uplink signal to the base station by using beams in a plurality of directions. The base station does not need to determine a beam configuration used by the base station to receive an uplink signal and a beam configuration used by the relay node to send an uplink signal. A relative position between the base station and the relay node usually remains unchanged. The beam configuration for receiving an uplink signal and the beam configuration used by the relay node to send an uplink signal may be determined when the base station and the relay node establish a connection for the first time, and the determined beam configurations enable the highest signal quality of a base station-relay node link, and do not need to be re-determined in a subsequent connection. The relative position between the base station and the relay node remains unchanged, and beam configurations repeatedly determined usually remain unchanged. Therefore, unnecessary processing and a waste of processing resources can be avoided. As shown in FIG. 6, it is assumed that a base station 601 can receive, in four beam directions, an uplink signal sent by a relay node 602, where beams are a beam 9, a beam 10, a beam 11, and a beam 12, and the relay node 602 can send the uplink signal to the base station 601 by using beams in four beam directions, where the beams are a beam 13, a beam 14, a beam 15, and a beam 16. When the base station 601 and the relay node establish a connection for the first time, a beam configuration used by the base station 601 to receive an uplink signal is the beam 9, and a beam configuration used by the relay node 602 to send an uplink signal is the beam 13. Uplink signal quality between the relay node 602 and the base station 601 is optimal by using the beam configurations. In a subsequent connection, the foregoing beam configurations do not need to be re-determined.

Optionally, the base station can receive, in the plurality of beam directions, the second uplink signal sent by the relay node. The base station receives a base station uplink beam determining command. The base station determines, based on the base station uplink beam determining command, the beam 9 as the beam configuration used by the base station to receive an uplink signal, and configures beams for receiving an uplink signal. The relative position between the base station and the relay node usually remains unchanged. However, when the base station or the relay node is created, or the base station or the relay node is reconstructed, or a building between the base station and the relay node changes greatly, the beam configuration used by the base station to receive an uplink signal still needs to be determined.

Optionally, the relay node can send the second uplink signal to the base station by using the beams in the plurality of directions. The base station receives a relay node uplink beam determining command. The base station determines, based on the relay node uplink beam determining command, the beam 13 as the beam configuration used by the relay node to send an uplink signal. The relative position between the base station and the relay node usually remains unchanged. However, when the base station or the relay node is created, or the base station or the relay node is reconstructed, or a building between the base station and the relay node changes greatly, the beam configuration used by the relay node to send an uplink signal still needs to be determined.

Optionally, if the first uplink signal quality is less than or equal to a first threshold, the base station obtains second uplink signal quality, where the second uplink signal quality is determined based on a third uplink signal sent by the relay node, and at least one beam configuration changes when the third uplink signal is transmitted on a terminal-relay node-base station link. The foregoing beam configuration for transmitting the first uplink signal is used as an example. The terminal sends the first uplink signal to the relay node by using the beam 5, and the relay node adjusts the receiver to the direction of the beam 1 to receive the first uplink signal. The relay node sends the second uplink signal to the base station by using the beam 13, and the base station adjusts the receiver to the direction of the beam 9 to receive the second uplink signal. Compared with the beam configuration for transmitting the first uplink signal, in this beam configuration, the relay node may receive the third uplink signal by using a beam different from the first beam. For example, the relay node receives the third uplink signal by using a third beam, or the terminal may send the third uplink signal to the relay node by using a beam 6. The second uplink signal quality can be obtained only when at least one of the beam configurations changes. The base station determines whether the second uplink signal quality is greater than the first threshold. If the second uplink signal quality is greater than the first threshold, the base station determines a beam configuration used by the relay node to transmit the third uplink signal as an uplink beam configuration of the relay node. If the second uplink signal quality is less than or equal to the first threshold, the base station may obtain fifth uplink signal quality, to change the beam configuration for transmitting an uplink signal, obtain corresponding uplink signal quality, and find uplink signal quality greater than the first threshold. FIG. 5 is used as an example of the beam configuration for transmitting an uplink signal. There are a total of 4×4×1×1 combinations.

Step 306: The base station determines third uplink signal quality based on the first uplink signal, and includes a first identifier in the first downlink signal if the third uplink signal quality is greater than a second threshold.

The first uplink signal is data that is not sent by the terminal to the base station through the relay node. The base station may determine, based on the first uplink signal, the third uplink signal quality between the base station and the terminal that are directly connected, and include the first identifier in the first downlink signal if the third uplink signal quality is greater than the second threshold.

Step 307: The base station sends the first downlink signal to the relay node.

Optionally, as described in step 306, the relative position between the base station and the relay node usually remains unchanged. If a beam configuration used by the base station to send a downlink signal does not need to be determined, the base station may send the first downlink signal by using the determined beam configuration for sending a downlink signal. The determined beam configuration is not necessarily the beam 9. When the base station can send the downlink signal to the relay node by using beams in a plurality of directions, the beam 9 may be an attempt to determine, when the base station or the relay node is created, or the base station or the relay node is reconstructed, or the building between the base station and the relay node changes greatly, the beam configuration used by the base station to send a downlink signal. When the beam configuration used by the base station to send a downlink signal does not need to be determined, the determined beam configuration is the beam 9.

Optionally, if the base station or the relay node is created, or the base station or the relay node is reconstructed, or the building between the base station and the relay node changes greatly, the base station can send the first downlink signal to the relay node by using the beams in the plurality of directions, and the beam configuration used by the base station to send a downlink signal needs to be determined. The base station may attempt to send the first downlink signal to the relay node by using a beam. Optionally, the beam and the beam configuration used by the base station to receive an uplink signal are in a same direction. According to channel reciprocity, when the beam configuration used by the base station to send a downlink signal and the beam configuration used by the base station to receive an uplink signal are in a same direction, it may be considered that channel fading is the same. Because the first uplink signal quality is greater than the first threshold, it may be considered that the beam configuration that is used by the base station to send a downlink signal and that is in the same direction as the beam configuration used by the base station to receive an uplink signal may obtain first downlink signal quality greater than the first threshold.

Step 308: The base station sends the first downlink signal to the terminal.

Because the terminal may also be located within a signal range of the base station, the base station may also send the first downlink signal to the terminal. The base station may send the first downlink signal to the relay node and the terminal during one data transmission.

Step 309: The relay node determines, based on the first downlink signal, the beam configuration for receiving an uplink signal.

After determining the beam configuration used by the relay node to receive an uplink signal, the base station includes, in the first downlink signal, information about the beam configuration used by the relay node to receive an uplink signal. After receiving the first downlink signal, the relay node configures a beam for receiving the uplink signal. That the relay node configures a beam for receiving the uplink signal may be understood as that the relay node invokes one or more parameters, where the parameters may adjust the receiver to the direction of the beam 1 to receive the uplink signal sent by the terminal.

Optionally, after receiving the first downlink signal, the relay node deletes information about the beam configuration used by the base station to receive an uplink signal.

Optionally, the base station includes, in the first downlink signal, information about the beam configuration used by the relay node to send an uplink signal. The relay node configures a beam for sending the uplink signal. That the relay node configures a beam for sending the uplink signal may be understood as that the relay node invokes one or more parameters, where the parameters may adjust the beam to the direction of the beam 13 to send the uplink signal to the base station.

Step 310: If the first downlink signal carries the first identifier, the relay node determines not to forward an uplink control signal.

If the first downlink signal carries the first identifier, it indicates that the third uplink signal quality between the base station and the terminal that are directly connected is greater than the second threshold. Therefore, the relay node may not forward the uplink control signal sent by the terminal to the base station, and the base station may receive the uplink control signal sent by the terminal, so that signaling overheads are reduced.

Step 311: The relay node sends the second downlink signal to the terminal.

Optionally, as described in step 306, the relative position between the base station and the relay node usually remains unchanged. If the beam configuration used by the relay node to receive a downlink signal does not need to be determined, the relay node may receive the first downlink signal by using the determined beam configuration for receiving a downlink signal

Optionally, if the beam configuration used by the relay node to receive a downlink signal needs to be determined, the relay node adjusts the receiver to a direction of a beam to receive the first downlink signal sent by the base station. Particularly, the direction is the same as a direction of a beam configuration, namely, the beam 13, used by the relay node to send the second uplink signal. After receiving the first downlink signal, the relay node sends the second downlink signal to the terminal. To distinguish between the first downlink signal directly sent by the base station to the terminal and a first downlink signal sent by the relay node to the terminal, herein, the first downlink signal sent by the relay node to the terminal is referred to as the second downlink signal. The second downlink signal may be the same as or different from the first downlink signal. For example, the relay node adds an identifier to the first downlink signal, to obtain the second downlink signal, so that the terminal determines, based on the identifier, that the second downlink signal is forwarded by the relay node.

Optionally, the first downlink signal includes a control signal and a service signal. An amplify-and-forward manner and a decode-and-forward manner are used by the relay node for the control signal. Only the amplify - and-forward manner is used by the relay node for the service signal.

Optionally, a direction of a beam configuration used by the relay node to send the second downlink signal to the terminal is the same as a direction of a beam configuration used by the relay node to receive the first uplink signal sent by the terminal. According to channel reciprocity, when the beam configuration used by the relay node to send a downlink signal and the beam configuration used by the relay node to receive an uplink signal are in a same direction, it may be considered that channel fading is the same. Because the first uplink signal quality is greater than the first threshold, it may be considered that the beam configuration that is used by the relay node to send a downlink signal and that is in the same direction as the beam configuration used by the relay node to receive an uplink signal may obtain the first downlink signal quality greater than the first threshold.

Step 312: The terminal determines the first downlink signal quality based on the second downlink signal.

Step 313: If the first downlink signal quality is greater than a third threshold, the terminal determines the downlink beam configuration of the relay node.

The first downlink signal quality reflects downlink signal quality of a base station-relay node-terminal link. If the first downlink signal quality is greater than the third threshold, it indicates that the uplink signal quality meets the requirement when the relay node sends the downlink signal by using the beam 2. In this case, the terminal determines the beam 2 as the beam configuration used by the relay node to send a downlink signal, and the downlink beam configuration of the relay node includes the beam configuration used by the relay node to send a downlink signal. When the first downlink signal quality is greater than the third threshold, the terminal determines the beam 2 as the beam configuration used by the relay node to send a downlink signal. This can reduce time for determining the beam configuration.

Optionally, the third threshold is second downlink signal quality, and the second downlink signal quality is determined based on a third downlink signal. The relay node receives, by using the beam 2, the third uplink signal sent by the terminal.

Optionally, when the relay node can send the downlink signal to the terminal in M beam directions, beams in the M directions may generate M pieces of downlink signal quality, and the first downlink signal quality is the highest downlink signal quality in the M pieces of downlink signal quality. The relay node is located between the base station and the terminal. If the relay node does not improve a signal-to-noise ratio of the downlink signal, signal quality of the terminal is usually lower than that of a terminal directly connected to the base station. Consequently, all the M pieces of uplink signal quality may not meet the signal quality requirement. The highest uplink signal quality in the M pieces of uplink signal quality needs to be determined, and communication data between the terminal and the base station is transmitted by using a beam configuration corresponding to the signal quality.

Optionally, when the terminal can receive, by using beams in a plurality of directions, the second downlink signal sent by the relay node, if the first downlink signal quality is greater than the third threshold, the terminal determines the beam 5 as the downlink beam configuration of the terminal. As shown in FIG. 5, it is assumed that the terminal 503 can receive, in four beam directions, a downlink signal sent by the relay node 502, where beams are a beam 5, a beam 6, a beam 7, and a beam 8. In step 3012, the terminal receives, by using a beam, the second downlink signal sent by the relay node. For example, the beam is the beam 5. If the first downlink signal quality is greater than the third threshold, the terminal 503 determines the beam 5 as a beam configuration used by the terminal 503 to receive the downlink signal sent by the relay node 502, namely, a downlink beam configuration of the terminal 503.

Optionally, the base station can send the first downlink signal to the relay node by using beams in a plurality of directions, and/or the relay node can receive, in a plurality of beam directions, the first downlink signal sent by the base station. The terminal does not need to determine the beam configuration used by the base station to send a downlink signal and the beam configuration used by the relay node to receive a downlink signal.

Optionally, the base station can send the first downlink signal to the relay node in the plurality of beam directions. The terminal receives a base station downlink beam determining command. The terminal determines, based on the base station downlink beam determining command, the beam 9 as the beam configuration used by the base station to send a downlink signal.

Optionally, the relay node can receive, by using the beams in the plurality of directions, the first downlink signal sent by the base station. The base station receives a relay node downlink beam determining command. The base station determines, based on the relay node downlink beam determining command, the beam 13 as the beam configuration used by the relay node to receive a downlink signal.

Step 314: The terminal determines third downlink signal quality based on the first downlink signal, and includes a second identifier in the third uplink signal if the third downlink signal quality is greater than a fourth threshold.

The first downlink signal is data that is not sent by the base station to the terminal through the relay node. The terminal may determine, based on the first downlink signal, the third downlink signal quality between the base station and the terminal that are directly connected, and include the second identifier in the third uplink signal if the third downlink signal quality is greater than the fourth threshold.

Step 315: The terminal sends the third uplink signal to the relay node.

After determining the downlink beam configuration of the relay node, the terminal includes information about the downlink beam configuration of the relay node in the third uplink signal, and sends the third uplink signal to the relay node.

Optionally, the second downlink signal and/or the first downlink signal carry/carries information about the uplink beam configuration of the terminal. The terminal configures an uplink beam based on the information about the uplink beam configuration, and sends the third uplink signal to the relay node by using the uplink beam configuration.

Optionally, the terminal sends the third uplink signal to the base station. Because the base station may also be located within the signal range of the terminal, the terminal may also send the third uplink signal to the base station. The terminal may send the third uplink signal to the relay node and the base station during one data transmission.

Step 316: If the third uplink signal carries the second identifier, determine not to forward a downlink control signal.

If the third uplink signal carries the second identifier, it indicates that the third uplink signal quality between the base station and the terminal that are directly connected is greater than the fourth threshold. Therefore, the relay node may not forward the downlink control signal sent by the base station to the terminal, and the terminal may receive the downlink control signal sent by the base station.

The third uplink signal carries the information about the downlink beam configuration of the relay node, and the relay node configures a downlink beam based on the information about the downlink beam configuration.

Optionally, the third uplink signal carries information about the beam configuration used by the relay node to receive a downlink signal, and the relay node configures, based on the information, a direction for receiving the downlink signal.

Optionally, if the first downlink signal does not carry the first identifier, the relay node sends the third uplink signal to the base station.

Optionally, if the third uplink signal carries information about the beam configuration used by the base station to send a downlink signal, the base station configures, based on the information, a beam for sending the downlink signal.

There is no limited time sequence relationship between step 301 and step 302, and step 301 and step 302 may alternatively be completed in one step. There is no limited time sequence relationship between step 307 and step 308, and step 307 and step 308 may alternatively be completed in one step. There is no limited time sequence relationship between step 306 and steps 304 and 305. There is no limited time sequence relationship between step 309 and step 310. There is no limited time sequence relationship between step 314 and steps 312 and 313.

2. The uplink beam configuration and the downlink beam configuration of the relay node are determined based on the uplink signal quality.

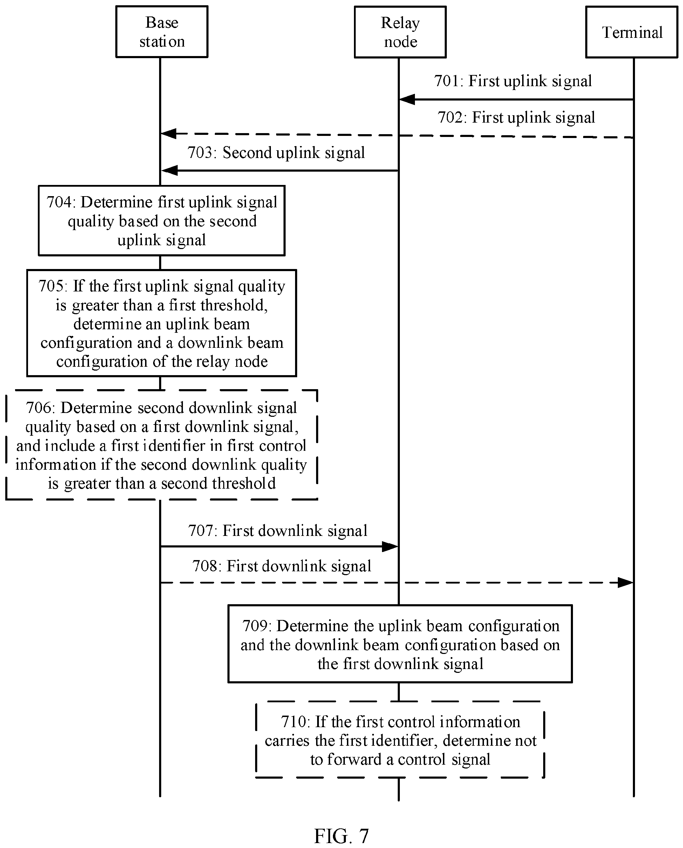

FIG. 7 is a schematic flowchart of a beam management method according to an embodiment of this application.

For ease of description, the following assumes an entire process of communication between a terminal and a base station. The terminal sends a first uplink signal to a relay node by using a beam 5, and the relay node adjusts a receiver to a direction of a beam 1 to receive the first uplink signal. The relay node sends a second uplink signal to the base station by using a beam 13, and the base station adjusts a receiver to a direction of a beam 9 to receive the second uplink signal

Step 701: The terminal sends the first uplink signal to the relay node.

Step 702: The terminal sends the first uplink signal to the base station.

Step 703: The relay node sends the second uplink signal to the base station.

Step 704: The base station determines first uplink signal quality based on the second uplink signal.

Step 701, step 702, step 703, and step 704 are similar to step 301, step 302, step 303, and step 304 in FIG. 3A and FIG. 3B. Details are not described herein again.

Step 705: If the first uplink signal quality is greater than a first threshold, the base station determines an uplink beam configuration and a downlink beam configuration of the relay node.

The uplink beam configuration of the relay node includes a beam configuration used by the relay node to receive an uplink signal. The first uplink signal quality reflects uplink signal quality of a terminal-relay node-base station link. If the first uplink signal quality is greater than the first threshold, it indicates that the uplink signal quality meets a requirement when the relay node receives the uplink signal by using the beam 1. In this case, the base station determines the beam 1 as the beam configuration used by the relay node to receive an uplink signal, so that the relay node adjusts the receiver to the direction of the beam 1 to receive the uplink signal. The downlink beam configuration of the relay node includes a beam configuration used by the relay node to send a downlink signal. According to channel reciprocity, when the uplink signal quality meets the requirement, the relay node sends a downlink signal by using a beam configuration that is in a same direction as the beam configuration for receiving an uplink signal, and downlink signal quality that meets the requirement may also be obtained. Therefore, the base station determines the beam 1 as the beam configuration used by the relay node to send a downlink signal, so that the relay node can send the downlink signal in the direction of the beam 1.

Optionally, the first threshold is second uplink signal quality, and the second uplink signal quality is determined based on a third uplink signal. The relay node receives, by using a beam 2, the third uplink signal sent by the terminal.

Optionally, when the relay node can receive, in the N beam directions, the uplink signal sent by the terminal, beams in the N directions may generate N pieces of uplink signal quality, and the first uplink signal quality is the highest uplink signal quality in the N pieces of uplink signal quality. The relay node is located between the base station and the terminal. If the relay node does not improve a signal-to-noise ratio of the uplink signal, signal quality of the terminal is usually lower than that of a terminal directly connected to the base station. Consequently, all the N pieces of uplink signal quality may not meet the signal quality requirement. The highest uplink signal quality in the N pieces of uplink signal quality needs to be determined, and communication data between the terminal and the base station is transmitted by using a beam configuration corresponding to the signal quality.

Optionally, when the terminal can send the first uplink signal to the relay node by using beams in a plurality of directions, if the first uplink signal quality is greater than the first threshold, the base station determines the beam 5 as an uplink beam configuration of the terminal and a downlink beam configuration of the terminal.

Optionally, the base station can receive, in a plurality of beam directions, the second uplink signal sent by the relay node, and/or the relay node can send the second uplink signal to the base station by using beams in a plurality of directions. The base station does not need to determine a beam configuration used by the base station to receive an uplink signal and a beam configuration used by the relay node to send an uplink signal.

Optionally, the base station can receive, in the plurality of beam directions, the second uplink signal sent by the relay node. The base station receives a base station beam determining command. The base station determines, based on the base station beam determining command, the beam 9 as the beam configuration used by the base station to receive an uplink signal and a beam configuration used by the base station to send a downlink signal

Optionally, the relay node can send the second uplink signal to the base station by using the beams in the plurality of directions. The base station receives a relay node beam determining command. The base station determines, based on the relay node beam determining command, the beam 13 as the beam configuration used by the relay node to send an uplink signal.

Step 706: The base station determines third uplink signal quality based on the second uplink signal, and includes a first identifier in a first downlink signal if the third uplink signal quality is greater than a second threshold.

Step 706 is similar to step 306 in FIG. 3A and FIG. 3B. Details are not described herein again.

Step 707: The base station sends the first downlink signal to the relay node.

If the base station determines, based on the base station beam determining command, the beam 9 as the beam configuration used by the base station to send a downlink signal, the base station sends the first downlink signal to the relay node by using the beam 9.

Step 708: The base station sends the first downlink signal to the terminal.

Because the terminal may also be located within a signal range of the base station, the base station may also send the first downlink signal to the terminal. The base station may send the first downlink signal to the relay node and the terminal during one signal transmission.

Step 709: The relay node determines the uplink beam configuration and the downlink beam configuration of the relay node based on the first downlink signal.

After determining the beam configuration used by the relay node to receive an uplink signal and the beam configuration used by the relay node to send a downlink signal, the base station includes, in the first downlink signal, information about the beam configuration used by the relay node to receive an uplink signal and information about the beam configuration used by the relay node to send a downlink signal. After receiving the first downlink signal, the relay node configures a beam, namely, the beam 5, used to receive the uplink signal and a beam, namely, the beam 5, used to send the downlink signal.

Optionally, after receiving the first downlink signal, the relay node deletes information about the beam configuration used by the base station to receive an uplink signal and the information about the beam configuration used by the relay node to send a downlink signal.

Optionally, the base station includes, in the first downlink signal, information about the beam configuration used by the relay node to send an uplink signal. The relay node configures a beam, namely, the beam 13, used to send the uplink signal. The base station includes, in the first downlink signal, information about the beam configuration used by the relay node to receive a downlink signal. The relay node configures a beam, namely, the beam 13, used to send the uplink signal.

Step 710: If the first downlink signal carries the first identifier, the relay node determines not to forward a control signal.

If the first downlink signal carries the first identifier, it indicates that the third uplink signal quality between the base station and the terminal that are directly connected is greater than the second threshold. Therefore, the relay node may not forward the control signal sent by the terminal to the base station, and the base station may receive the control signal sent by the terminal. The control signal includes an uplink control signal and a downlink control signal.

Optionally, after the terminal receives the first downlink signal, if the first downlink signal includes a beam configuration used by the terminal to send an uplink signal, the terminal configures a beam, namely, a beam 5, used to send the uplink signal; or if the first downlink signal includes a beam configuration used by the terminal to receive a downlink signal, the terminal configures a beam, namely, a beam 5, used to receive the downlink signal.

There is no limited time sequence relationship between step 701 and step 702, and step 701 and step 702 may alternatively be completed in one step. There is no limited time sequence relationship between step 707 and step 708, and step 707 and step 708 may alternatively be completed in one step. There is no limited time sequence relationship between step 706 and steps 704 and 705.

The uplink beam configuration and the downlink beam configuration of the relay node are determined based on the uplink signal quality. In addition, the downlink beam configuration and the uplink beam configuration of the relay node may be further determined based on downlink signal quality. For a specific operation procedure, refer to a procedure of determining the uplink beam configuration and the downlink beam configuration of the relay node based on the uplink signal quality.

The foregoing describes the beam management method in embodiments of this application. The following describes a beam management apparatus in embodiments of this application.

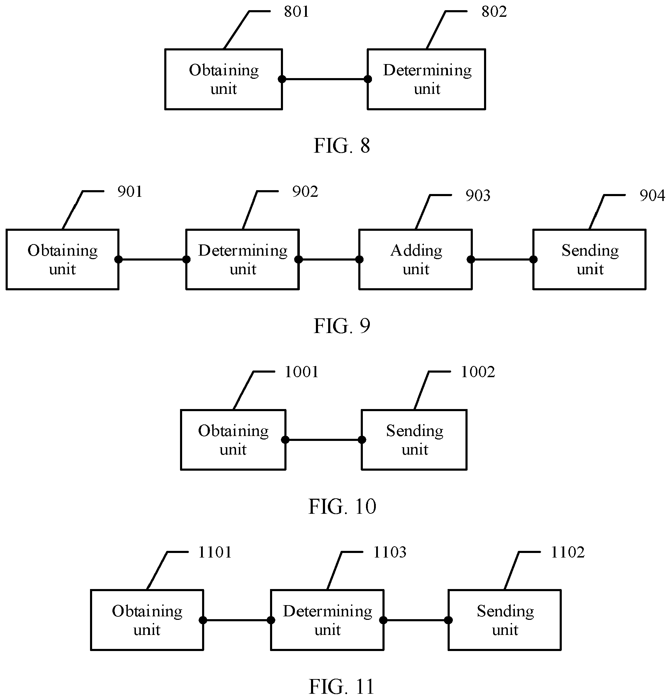

FIG. 8 is a schematic diagram of a structure of a beam management apparatus according to an embodiment of this application.

An obtaining unit 801 is configured to obtain first signal quality, where the first signal quality includes information about signal quality between a terminal and a base station, and data communication between the terminal and the base station is performed through a relay node.

A determining unit 802 is configured to determine a beam configuration of the relay node based on the first signal quality.

In this embodiment, the obtaining unit 801 may obtain the first signal quality, and the determining unit 802 determines the beam configuration of the relay node based on the first signal quality, where the beam configuration is related to a beam direction, data communication is performed between the terminal and the base station through the relay node, and the first signal quality includes the information about the signal quality between the terminal and the base station. In a process of signal communication between the base station and the terminal, the base station or the terminal may evaluate the signal quality between the terminal and the base station, to obtain the first signal quality. Therefore, the relay node may not depend on a high-performance detector, so that hardware costs of the relay node are reduced.

In this embodiment, an operation performed by each unit of the beam management apparatus is similar to that described in the embodiment shown in FIG. 2. Details are not described herein again.

FIG. 9 is a schematic diagram of another structure of a beam management apparatus according to an embodiment of this application.

An obtaining unit 901 is configured to obtain first signal quality, where the first signal quality includes information about signal quality between a terminal and a base station, and data communication between the terminal and the base station is performed through a relay node.

A determining unit 902 is configured to determine a beam configuration of the relay node based on the first signal quality.

The beam management apparatus further includes:
Optionally, the obtaining unit 901 is specifically configured to obtain first uplink signal quality, where the first uplink signal quality includes the information about the signal quality between the terminal and the base station, and data communication between the terminal and the base station is performed through the relay node.

The apparatus further includes:
a sending unit 904, configured to send a first downlink signal to the relay node, where the first downlink signal includes an uplink beam configuration of the relay node, the uplink beam configuration of the relay node includes a beam configuration used by the relay node to receive an uplink signal, and the uplink beam configuration of the relay node is determined based on the first uplink signal quality.

If the first uplink signal quality is greater than a first threshold, the uplink beam configuration of the relay node includes an identifier corresponding to a first beam, to indicate the relay node to receive an uplink signal by using the first beam, where the first uplink signal quality is obtained based on the uplink signal received by the relay node by using the first beam.

Optionally, the first uplink signal quality is obtained based on a first uplink signal received by the relay node by using a first beam.

The obtaining unit 901 is further configured to obtain second uplink signal quality, where the second uplink signal quality includes information about signal quality between the terminal and the base station, and the third uplink quality is obtained based on an uplink signal received by the relay node by using a second beam.

If the first uplink signal quality is greater than the second uplink signal quality, the uplink beam configuration of the relay node includes an identifier corresponding to the first beam, to indicate the relay node to receive the uplink signal by using the first beam.

Optionally, the first downlink signal further includes an uplink beam configuration of the terminal, the uplink beam configuration of the terminal is determined based on the first uplink signal quality, and the uplink beam configuration of the terminal includes a beam configuration used by the terminal to send an uplink signal.

Optionally, the uplink beam configuration of the relay node further includes a beam configuration used by the relay node to send an uplink signal.

The determining unit 902 is further configured to determine an uplink beam configuration of the base station based on the first uplink signal quality, where the uplink beam configuration of the base station includes a beam configuration used by the base station to receive an uplink signal.

Optionally, the first downlink signal includes a downlink beam configuration of the terminal, the downlink beam configuration of the terminal is determined based on the first uplink signal quality, the first downlink signal includes a downlink beam configuration of the relay node, the downlink beam configuration of the relay node is determined based on the first uplink signal quality, the downlink beam configuration of the relay node includes a beam configuration used by the relay node to receive a downlink signal and a beam configuration used by the relay node to send a downlink signal, a direction of the beam configuration used by the relay node to receive a downlink signal is the same as a direction of the beam configuration used by the relay node to send an uplink signal, a direction of the beam configuration used by the relay node to send a downlink signal is the same as a direction of the beam configuration used by the relay node to receive an uplink signal, and a direction of the downlink beam configuration of the terminal is the same as a direction of the uplink beam configuration of the terminal.

The determining unit 902 is further configured to determine a downlink beam configuration of the base station based on the first uplink signal quality, where a direction of the downlink beam configuration of the base station is the same as a direction of the uplink beam configuration of the base station.

The sending unit 904 is specifically configured to send the first downlink signal to the relay node based on the downlink beam configuration of the base station.

Optionally, the obtaining unit 901 is further configured to obtain the first uplink signal sent by the terminal.

The determining unit 902 is further configured to determine third uplink signal quality based on the first uplink signal

Optionally, the apparatus further includes:
an adding unit 903, configured to add a first identifier to the first downlink signal if the third uplink signal quality is greater than a second threshold.

Optionally, the beam management apparatus is the terminal.

An obtaining unit 901 is specifically configured to obtain first downlink signal quality, where the first downlink signal quality includes the information about the signal quality between the terminal and the base station, and data communication between the terminal and the base station is performed through the relay node.

The apparatus further includes:
a sending unit 904, configured to send a third uplink signal to the relay node, where the third uplink signal includes a downlink beam configuration of the relay node, an uplink beam configuration of the relay node includes a beam configuration used by the relay node to send a downlink signal, and the downlink beam configuration of the relay node is determined based on the first downlink signal quality.

If the first downlink signal quality is greater than a third threshold, the downlink beam configuration of the relay node includes an identifier corresponding to a first beam, to indicate the relay node to send a downlink signal by using the first beam, where the first downlink signal quality is obtained based on a downlink signal sent by the relay node by using a second beam.

Optionally, the first downlink signal quality is obtained based on a first downlink signal sent by the relay node by using a second beam.

The obtaining unit 901 is further configured to obtain second downlink signal quality, where the second downlink signal quality includes information about signal quality between the terminal and the base station, and the third downlink quality is obtained based on a downlink signal sent by the relay node by using a first beam.

If the first downlink signal quality is greater than the second downlink signal quality, the base station adds, to the third uplink signal, an identifier corresponding to the second beam, so that the relay node uses the second beam as the downlink beam configuration of the relay node.

Optionally, the determining unit 901 is further configured to determine, by the terminal, a downlink beam configuration of the terminal based on the first downlink signal quality, where the downlink beam configuration of the terminal includes a beam configuration used by the terminal to receive a downlink signal.

Optionally, the downlink beam configuration of the relay node includes a beam configuration used by the relay node to receive a downlink signal, the third uplink signal includes a downlink beam configuration of the base station, the downlink beam configuration of the base station includes a beam configuration used by the base station to send a downlink signal, and the downlink beam configuration of the base station is determined based on the first downlink signal quality.

Optionally, the third uplink signal includes an uplink beam configuration of the base station, the third uplink signal includes an uplink beam configuration of the relay node, the uplink beam configuration of the relay node includes a beam configuration used by the relay node to receive an uplink signal and a beam configuration used by the relay node to send an uplink signal, a direction of the beam configuration used by the relay node to receive an uplink signal is the same as a direction of the beam configuration used by the relay node to send a downlink signal, a direction of the beam configuration used by the relay node to send an uplink signal is the same as a direction of the beam configuration used by the relay node to receive a downlink signal, and a direction of the uplink beam configuration of the base station is the same as a direction of the downlink beam configuration of the base station.

The determining unit 902 is further configured to determine an uplink beam configuration of the terminal based on the first downlink signal quality, where a direction of the uplink beam configuration of the terminal is the same as a direction of the downlink beam configuration of the terminal.

The sending unit 904 is specifically configured to send the third uplink signal to the relay node based on the uplink beam configuration of the terminal.

Optionally, the obtaining unit 901 is further configured to obtain the first downlink signal sent by the base station.

The determining unit 902 is further configured to determine third downlink signal quality based on the first downlink signal.

An adding unit 903 is further configured to add a first identifier to the third uplink signal if the third downlink signal quality is greater than a fourth threshold.

In this embodiment, an operation performed by each unit of the beam management apparatus is similar to that described in the embodiment shown in FIG. 3A and FIG. 3B or FIG. 7. Details are not described herein again.

FIG. 10 is a schematic diagram of another structure of a beam management apparatus according to an embodiment of this application.

An obtaining unit 1001 is configured to obtain a first signal, where the first signal includes a beam configuration of a communication device, the beam configuration of the communication device is obtained based on first signal quality, the first signal quality includes information about signal quality between a terminal and a base station, and data communication between the terminal and the base station is performed through a relay node.

A sending unit 1002 is configured to send a signal between the terminal and the base station based on the beam configuration of the communication device.

In this embodiment, the obtaining unit 1001 may obtain the beam configuration of the communication device, and the sending unit 1002 may send data between the terminal and the base station based on the beam configuration of the communication device. Data communication between the terminal and the base station is performed through the relay node. The beam configuration of the communication device is obtained based on the first signal quality, and the first signal quality includes the information about the signal quality between the terminal and the base station. In a process of data communication between the base station and the terminal, the base station or the terminal may evaluate the signal quality between the terminal and the base station, to obtain the first signal quality. Therefore, the relay node may not depend on a high-performance detector, so that hardware costs of the relay node are reduced.

FIG. 11 is a schematic diagram of another structure of a beam management apparatus according to an embodiment of this application.

An obtaining unit 1101 is configured to obtain a first downlink signal, where the first downlink signal includes an uplink beam configuration of a relay node, the uplink beam configuration of the relay node is obtained based on first uplink signal quality, the first uplink signal quality includes information about signal quality between a terminal and a base station, and data communication between the terminal and the base station is performed through the relay node.

A sending unit 1102 is configured to receive, based on the uplink beam configuration of the relay node, an uplink signal sent by the terminal.

The beam management apparatus further includes:

Optionally, the uplink beam configuration of the relay node includes a beam configuration used by the relay node to send an uplink signal.

Optionally, a beam configuration of the relay node includes a downlink beam configuration of the relay node, the downlink beam configuration of the relay node includes a beam configuration used by the relay node to receive a downlink signal, and the downlink beam configuration of the relay node includes a beam configuration used by the relay node to send a downlink signal.

Optionally, the first downlink signal includes a first identifier.

The apparatus further includes:
a determining unit 1103, configured to determine, by the relay node based on the first identifier, not to forward a control signal between the terminal and the base station.

In this embodiment, an operation performed by each unit of the beam management apparatus is similar to that described in the embodiment shown in FIG. 3A and FIG. 3B or FIG. 7. Details are not described herein again.

The foregoing describes the beam management apparatus in embodiments of this application. The following describes a beam management device in embodiments of this application.

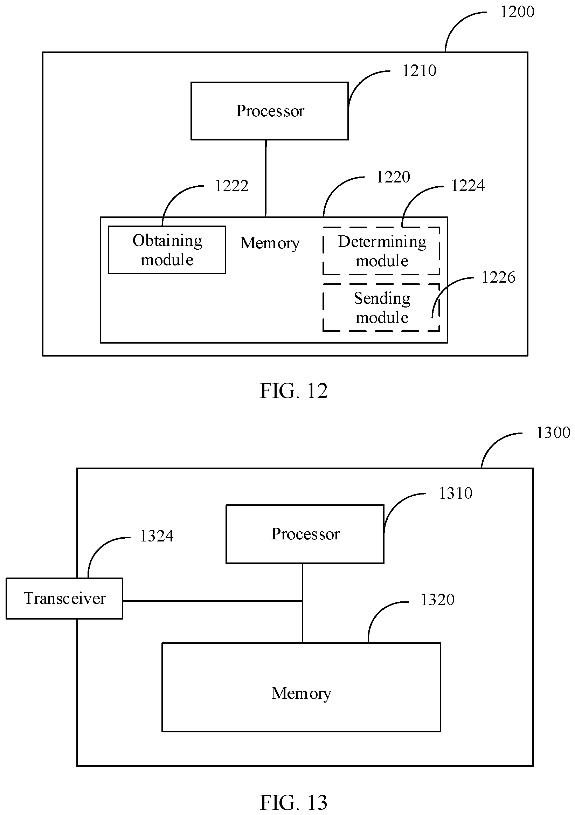

FIG. 12 is a schematic diagram of a structure of a beam management device according to an embodiment of this application.

As shown in FIG. 12, the beam management device 1200 includes a processor 1210, and a memory 1220 coupled to the processor 1210. The beam management device 1200 may be the base station, the terminal, or the relay node in FIG. 1. The processor 1210 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 1210 may be one processor, or may include a plurality of processors. The memory 1220 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory may alternatively include a combination of the foregoing types of memories.

The memory 1220 stores computer-readable instructions, and the computer-readable instructions include a plurality of software modules, for example, an obtaining module 1222 and a determining module 1224. After executing each software module, the processor 1210 may perform a corresponding operation based on an indication of the software module. In this embodiment, an operation performed by a software module is actually an operation performed by the processor 1210 based on an indication of the software module. The obtaining module 1222 may be configured to obtain first signal quality, where the first signal quality includes information about signal quality between a terminal and a base station, and data communication between the terminal and the base station is performed through a relay node. The determining module 1224 may be configured to determine a beam configuration of the relay node based on the first signal quality. In addition, after executing the computer-readable instructions in the memory 1220, the processor 1210 may perform, based on indications of the computer-readable instructions, all operations that may be performed by the beam management device, for example, operations performed by the base station or the terminal in the embodiment corresponding to FIG. 3A and FIG. 3B or FIG. 7.

Alternatively, the memory 1220 stores computer-readable instructions, and the computer-readable instructions include a plurality of software modules, for example, an obtaining module 1222 and a sending module 1226. After executing each software module, the processor 1210 may perform a corresponding operation based on an indication of the software module. In this embodiment, an operation performed by a software module is actually an operation performed by the processor 1210 based on an indication of the software module. The obtaining module 1222 may be configured to obtain a first signal, where the first signal includes a beam configuration of a communication device, the beam configuration of the communication device is obtained based on first signal quality, the first signal quality includes information about signal quality between a terminal and a base station, and data communication between the terminal and the base station is performed through a relay node. The sending module 1226 may be configured to send data between the terminal and the base station based on the beam configuration of the communication device. In addition, after executing the computer-readable instructions in the memory 1220, the processor 1210 may perform, based on indications of the computer-readable instructions, all operations that may be performed by the beam management device, for example, operations performed by the relay node in the embodiment corresponding to FIG. 3A and FIG. 3B or FIG. 7.

FIG. 13 is a schematic diagram of a structure of a chip system according to an embodiment of this application.

As shown in FIG. 13, the chip system 1300 includes a processor 1310, a memory 1320 coupled to the processor 1310, and a transceiver 1324 connected to the processor 1310 and the memory 1320. The memory 1320 stores instructions, and the instructions may be executed by the processor 1310. The processor 1310 may be a general-purpose central processing unit (central processing unit, CPU), a microprocessor, an application-specific integrated circuit (application-specific integrated circuit, ASIC), or an integrated circuit. The chip system may include a chip, or may include a chip and another discrete component.

Optionally, the memory 1320 may be a storage unit in the chip system, for example, a register or a cache. The memory 1320 may alternatively be a storage unit that is located outside the chip system, for example, a read-only memory (read-only memory, ROM), another type of static storage device that can store static information and instructions, or a random access memory (random access memory, RAM).

The chip system may be used in the base station in the embodiment corresponding to FIG. 3A and FIG. 3B or FIG. 7, and the processor 1310 performs an operation of the base station in the embodiment corresponding to FIG. 3A and FIG. 3B or FIG. 7.

Alternatively, the chip system may be used in the terminal in the embodiment corresponding to FIG. 3A and FIG. 3B or FIG. 7, and the processor 1310 performs an operation of the terminal in the embodiment corresponding to FIG. 3A and FIG. 3B or FIG. 7.

Alternatively, the chip system may be used in the relay node in the embodiment corresponding to FIG. 3A and FIG. 3B or FIG. 7, and the processor 1310 performs an operation of the relay node in the embodiment corresponding to FIG. 3A and FIG. 3B or FIG. 7.

In several embodiments provided in this application, it should be understood that the disclosed system, apparatus, and method may be implemented in another manner. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to a current technology, or all or some of the technical solutions may be implemented in a form of a software product. The computer software product is stored in a storage medium, and includes several instructions for instructing a computer device (which may be a personal computer, a server, or a base station) to perform all or some of the steps of the methods described in the embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A beam management method, comprising:
obtaining, by a base station, first uplink signal quality, wherein the first uplink signal quality comprises information about signal quality between a terminal and the base station, and data communication between the terminal and the base station is performed through a relay node; and
sending, by the base station, a first downlink signal to the relay node, wherein the first downlink signal comprises an uplink beam configuration of the relay node, the uplink beam configuration of the relay node comprises a beam configuration used by the relay node to receive an uplink signal, and the uplink beam configuration of the relay node is determined based on the first uplink signal quality.

2. The method according to claim 1, wherein the method further comprises:
if the first uplink signal quality is greater than a first threshold, the uplink beam configuration of the relay node comprises an identifier corresponding to a first beam, to indicate the relay node to receive an uplink signal by using the first beam, wherein the first uplink signal quality is obtained based on the uplink signal received by the relay node by using the first beam.

3. The method according to claim 1, wherein the first uplink signal quality is obtained based on a first uplink signal received by the relay node by using a first beam; and
the method further comprises:
obtaining, by the base station, second uplink signal quality, wherein the second uplink signal quality comprises information about signal quality between the terminal and the base station, and the second uplink signal quality is obtained based on an uplink signal received by the relay node by using a second beam, wherein
if the first uplink signal quality is greater than the second uplink signal quality, the uplink beam configuration of the relay node comprises an identifier corresponding to the first beam, to indicate the relay node to receive the uplink signal by using the first beam.

4. The method according to any one of claims 1 to 3, wherein the first downlink signal further comprises an uplink beam configuration of the terminal, the uplink beam configuration of the terminal is determined based on the first uplink signal quality, and the uplink beam configuration of the terminal comprises a beam configuration used by the terminal to send an uplink signal.

5. The method according to claim 4, wherein the uplink beam configuration of the relay node further comprises a beam configuration used by the relay node to send an uplink signal; and
the method further comprises:
determining, by the base station, an uplink beam configuration of the base station based on the first uplink signal quality, wherein the uplink beam configuration of the base station comprises a beam configuration used by the base station to receive an uplink signal.

6. The method according to claim 5, wherein the first downlink signal comprises a downlink beam configuration of the terminal, the downlink beam configuration of the terminal is determined based on the first uplink signal quality, the first downlink signal comprises a downlink beam configuration of the relay node, the downlink beam configuration of the relay node is determined based on the first uplink signal quality, the downlink beam configuration of the relay node comprises a beam configuration used by the relay node to receive a downlink signal and a beam configuration used by the relay node to send a downlink signal, a direction of the beam configuration used by the relay node to receive a downlink signal is the same as a direction of the beam configuration used by the relay node to send an uplink signal, a direction of the beam configuration used by the relay node to send a downlink signal is the same as a direction of the beam configuration used by the relay node to receive an uplink signal, and a direction of the downlink beam configuration of the terminal is the same as a direction of the uplink beam configuration of the terminal;
the method further comprises:
determining, by the base station, a downlink beam configuration of the base station based on the first uplink signal quality, wherein a direction of the downlink beam configuration of the base station is the same as a direction of the uplink beam configuration of the base station; and
the sending, by the base station, a first downlink signal to the relay node comprises:
sending, by the base station, the first downlink signal to the relay node based on the downlink beam configuration of the base station.

7. The method according to any one of claims 1 to 6, wherein the method further comprises:
obtaining, by the base station, the first uplink signal sent by the terminal;
determining, by the base station, third uplink signal quality based on the first uplink signal; and
adding, by the base station, a first identifier to the first downlink signal if the third uplink signal quality is greater than a second threshold.

8. A beam management method, comprising:
obtaining, by a terminal, first downlink signal quality, wherein the first downlink signal quality comprises information about signal quality between the terminal and a base station, and data communication between the terminal and the base station is performed through a relay node; and
sending, by the terminal, a third uplink signal to the relay node, wherein the third uplink signal comprises a downlink beam configuration of the relay node, the downlink beam configuration of the relay node comprises a beam configuration used by the relay node to send a downlink signal, and the downlink beam configuration of the relay node is determined based on the first downlink signal quality.

9. The method according to claim 8, wherein the method further comprises:
if the first downlink signal quality is greater than a third threshold, the downlink beam configuration of the relay node comprises an identifier corresponding to a first beam, to indicate the relay node to send a downlink signal by using the first beam, wherein the first downlink signal quality is obtained based on a downlink signal sent by the relay node by using a second beam.

10. The method according to claim 8, wherein the first downlink signal quality is obtained based on a first downlink signal sent by the relay node by using a second beam; and
the method further comprises:
obtaining, by the base station, second downlink signal quality, wherein the second downlink signal quality comprises information about signal quality between the terminal and the base station, and the third downlink quality is obtained based on a downlink signal sent by the relay node by using a first beam, wherein
if the first downlink signal quality is greater than the second downlink signal quality, the downlink beam configuration of the relay node comprises an identifier corresponding to the first beam, to indicate the relay node to send the downlink signal by using the first beam.

11. The method according to any one of claims 8 to 10, wherein the method further comprises:
determining, by the terminal, a downlink beam configuration of the terminal based on the first downlink signal quality, wherein the downlink beam configuration of the terminal comprises a beam configuration used by the terminal to receive a downlink signal.

12. The method according to claim 11, wherein
the downlink beam configuration of the relay node comprises a beam configuration used by the relay node to receive a downlink signal, the third uplink signal comprises a downlink beam configuration of the base station, the downlink beam configuration of the base station comprises a beam configuration used by the base station to send a downlink signal, and the downlink beam configuration of the base station is determined based on the first downlink signal quality.

13. The method according to claim 12, wherein
the third uplink signal comprises an uplink beam configuration of the base station, the third uplink signal comprises an uplink beam configuration of the relay node, the uplink beam configuration of the relay node comprises a beam configuration used by the relay node to receive an uplink signal and a beam configuration used by the relay node to send an uplink signal, a direction of the beam configuration used by the relay node to receive an uplink signal is the same as a direction of the beam configuration used by the relay node to send a downlink signal, a direction of the beam configuration used by the relay node to send an uplink signal is the same as a direction of the beam configuration used by the relay node to receive a downlink signal, and a direction of the uplink beam configuration of the base station is the same as a direction of the downlink beam configuration of the base station;
the method further comprises:
determining, by the terminal, an uplink beam configuration of the terminal based on the first downlink signal quality, wherein a direction of the uplink beam configuration of the terminal is the same as a direction of the downlink beam configuration of the terminal; and
the sending, by the terminal, a third uplink signal to the relay node comprises:
sending, by the terminal, the third uplink signal to the relay node based on the uplink beam configuration of the terminal.

14. The method according to any one of claims 8 to 13, wherein the method further comprises:
obtaining, by the terminal, the first downlink signal sent by the base station;
determining, by the terminal, third downlink signal quality based on the first downlink signal; and
adding, by the terminal, a first identifier to the third uplink signal if the third downlink signal quality is greater than a fourth threshold.

15. A beam management method, comprising:
obtaining, by a relay node, a first downlink signal, wherein the first downlink signal comprises an uplink beam configuration of the relay node, the uplink beam configuration of the relay node is obtained based on first uplink signal quality, the first uplink signal quality comprises information about signal quality between a terminal and a base station, and data communication between the terminal and the base station is performed through the relay node; and
receiving, by the relay node based on the uplink beam configuration of the relay node, an uplink signal sent by the terminal.

16. The method according to claim 15, wherein the uplink beam configuration of the relay node comprises a beam configuration used by the relay node to send an uplink signal.

17. The method according to claim 16, wherein a beam configuration of the relay node comprises a downlink beam configuration of the relay node, the downlink beam configuration of the relay node comprises a beam configuration used by the relay node to receive a downlink signal, and the downlink beam configuration of the relay node comprises a beam configuration used by the relay node to send a downlink signal.

18. The method according to any one of claims 15 to 17, wherein the first downlink signal comprises a first identifier; and
the method further comprises:
determining, by the relay node based on the first identifier, not to forward a control signal between the terminal and the base station.

19. A chip system, comprising: a processor, a memory, and a transceiver, wherein the memory, the transceiver, and the processor are interconnected through a line, the memory stores instructions, and the instructions are executed by the processor; and
the chip system is used in a base station, and the processor performs, according to the instructions, an operation of the base station in the method according to any one of claims 1 to 7; or
the chip system is used in a terminal, and the processor performs, according to the instructions, an operation of the terminal in the method according to any one of claims 8 to 14; or
the chip system is used in a relay node, and the processor performs, according to the instructions, an operation of the relay node in the method according to any one of claims 15 to 18.

20. A beam management apparatus, comprising an obtaining unit and a sending unit that are configured to perform any one of claims 1 to 7, claims 8 to 14, or claims 15 to 18.

21. A beam management device, comprising a memory and a processor, wherein
the memory is configured to store a program; and
the processor is configured to execute the program in the memory, comprising performing the method according to any one of claims 1 to 7, the method according to any one of claims 8 to 14, or the method according to any one of claims 15 to 18.

22. A computer storage medium, wherein the computer storage medium stores instructions; and when the instructions are executed on a computer, the computer is enabled to perform the method according to any one of claims 1 to 7, the method according to any one of claims 8 to 14, or the method according to any one of claims 15 to 18.

23. A computer program product, wherein when the computer program product is executed on a computer, the computer is enabled to perform the method according to any one of claims 1 to 7, the method according to any one of claims 8 to 14, or the method according to any one of claims 15 to 18.
